# EUROPÄISCHE PATENTSCHRIFT

(11) **EP 2 832 908 B1**
(45) Veröffentlichungstag und Bekanntmachung des Hinweises auf die Patenterteilung: **04.01.2023**
(21) Anmeldenummer: 13405098.8
(22) Anmeldetag: 30.07.2013
(51) Int. Cl.: D03D 49/62, D03D 51/20, D03D 51/34

(54) **Überwachungsvorrichtung für eine Webmaschine, Webmaschine und Verfahren zur Überwachung**
Monitoring device for a weaving loom, weaving loom and method of monitoring
Dispositif de surveillance pour un métier à tisser, métier à tisser et procédé de surveillance

(43) Veröffentlichungstag der Anmeldung: 04.02.2015
(73) Patentinhaber: Stäubli Sargans AG, 7320 Sargans (CH)
(72) Erfinder: Wolf, Markus, FL-9494 Schaan (LI); Ackermann, Armin, CH-8887 Mels (CH)
(74) Vertreter: EGLI-EUROPEAN PATENT ATTORNEYS

(56) Entgegenhaltungen:
- WO-A1-2006/117673
- FR-A1- 2 785 628
- JP-A- H03 241 043
- JP-A- H04 241 148
- JP-A- H04 241 149
- JP-A- H08 209 501
- JP-A- H08 302 535

## Beschreibung

Die Erfindung betrifft eine Überwachungsvorrichtung für eine Webmaschine. Weiterhin betrifft die Erfindung eine Webmaschine mit einer Überwachungsvorrichtung. Schliesslich betrifft die Erfindung ein Verfahren zur Überwachung der Kettfaden einer Webmaschine.

Zur Herstellung von gewebten Stoffen werden heutzutage in aller Regel automatische Webmaschinen eingesetzt. Derartige Webmaschinen existieren in unterschiedlichen Ausführungsformen. Ein Hauptunterschied besteht beispielsweise darin, auf welche Weise der Schussfaden durch das Webfach geführt wird. Hier sind beispielsweise Webmaschinen bekannt, die den Schussfaden mithilfe eines Schiffchens mit Schwung durch das Webfach hindurchschiessen. Auch sind Webmaschinen bekannt, bei denen der Schussfaden mittels einer Greifervorrichtung durch das Webfach hindurchbewegt wird. In letzter Zeit haben sich auch Webmaschinen durchgesetzt, bei denen der Schussfaden mittels Druckluft durch das Webfach hindurchgeschossen wird.

Unabhängig davon, wie die konkrete Bauweise aussieht, sind heutige Webmaschinen möglichst weitgehend automatisiert und die ständigen Kontrollen durch einen Maschinenbediener bzw. die Eingriffe eines Maschinenbedieners sind über möglichst lange Zeiträume hinweg stark reduziert.

Schlechte Fadenqualität, schlechte Webvorbereitungsqualität, nicht-optimierte Steuerung der Webmaschine, Fehlbedienungen sind mehrere Gründe, die zu gewissen Störungen im Webverlauf führen. Beispielsweise können sich benachbarte Kettfäden leicht miteinander verhaken, sodass es beispielsweise nicht zu einem korrekt geöffneten Webfach kommt oder es beispielsweise zu Kettfadenbrüchen führt. Beispielsweise kann der Bediener nach einem Stopp der Maschine wegen eines Kettfadenbruchs zwei Fadenenden verknoten, die nicht von demselben Faden kommen. Hierdurch kommt es in aller Regel zu Fehlern im produzierten Stoff (fachsprachlich als Webfehler bezeichnet), die im günstigsten Fall optisch störend sind, im ungünstigsten Fall zu einer Unbrauchbarkeit des Stoffs führen. Da Stoffe heutzutage in grösseren Längeneinheiten verkauft werden (wobei diese in derartigen Längeneinheiten fehlerfrei sein müssen), kann auch ein kleiner Fehler zu einem vergleichsweise grossen wirtschaftlichen Verlust führen, da eine grössere Länge des produzierten Stoffs als Ausschuss zu betrachten ist (bzw. als fehlerhafte Ware, deren Verkaufspreis signifikant verringert ist). Ein derartiger wirtschaftlicher Verlust ist naturgemäss unerwünscht.

Die genannten Probleme einer nicht korrekten Webfachöffnung (und sonstiger Störungen) nehmen mit zunehmender Arbeitsgeschwindigkeit der Webmaschinen zu.

Von daher besteht ein zunehmendes Interesse daran, dass nicht nur der eigentliche Webvorgang automatisiert abläuft, sondern auch eine möglichst dauerhafte, vollständige und kontinuierliche automatisierte Überwachung der Qualität des Weberzeugnisses während seiner Entstehung stattfindet.

Zu diesem Zweck sind im Stand der Technik bereits unterschiedliche Überwachungsvorrichtungen vorgeschlagen worden.

So ist beispielsweise in der Deutschen Offenlegungsschrift DE 34 353 91 A1 eine Anordnung zur Überwachung und Steuerung bei Webmaschinen mittels einer Videokamera beschrieben. Die Videokamera nimmt ein Bild von Kette und Gewebe an der Anschlagkante auf. Diese Information wird einer Mustererkennungsvorrichtung zugeführt, auf einem Monitor abgebildet und analysiert. Die Kameravorrichtung ist dabei oberhalb des Webfachs, im Bereich der Anschlagkante des Webblatts, angeordnet. Die Kameravorrichtung ist dabei unabhängig von der Weblade und starr gegenüber dem "Rest der Webmaschine" (insbesondere dem Webmaschinenrahmen) angeordnet.

Die Nachteile dieser Überwachungsvorrichtung sind, dass sie von Gewebe und Fäden relativ weit entfernt ist, dass sie Vibrationen von Gewebe und Fäden berücksichtigen muss, dass sie Platz auf der Webmaschine benötigt, allenfalls die Sicht des Webers auf das Gewebe behindert und dass das Webblatt relativ zur Kamera der Überwachung mobil ist und somit das Aufnehmen von Bildern mittels der Kamera behindert bzw. den mittels der Kamera überwachbaren Bereich der Webmaschine einschränkt.

In der Patentschrift US 3,989,068 wird eine fotoelektrische Detektionsanordnung zur Detektion von Kettfadenbrüchen mit einem Lichtstrahl durch das Fach hindurch vorgeschlagen. Bei dieser wird im Bereich des Webfachs an den beiden Seiten des Webfachs eine Lichtquelle bzw. ein Fotodetektor nach Art einer Lichtschranke angeordnet. Lichtquelle und Fotodetektor sind dabei mit der Weblade mechanisch verbunden und bewegen sich mit dieser mit. Mit der dort beschriebenen Vorrichtung ist es nur möglich, Kettfadenbrüche zu erkennen. Andere Fehler sind jedoch nicht zuverlässig zu erkennen. Insbesondere ist es auch nicht möglich, den Ort eines Kettfadenbruchs entlang der Breite des gewebten Stoffs zu finden, sodass es nicht möglich ist festzustellen, welcher der Kettfäden einer Webkette den Kettfadenbruch aufweist.

Eine Überwachungsvorrichtung gemäß des Oberbegriffs des Anspruchs 1 ist aus JP H08302535 A schon bekannt.

Schliesslich ist noch in der US-Patentschrift US 4,643,230 eine Überprüfungsvorrichtung nur für gewebte Stoffe offenbart, die als Detektorkopf ausgebildet ist und die mithilfe einer Antriebsvorrichtung sukzessive über die Breite des Gewebes hin- und herbewegt wird. Im Detektorkopf befinden sich eine Lichtquelle und ein Fotodetektor. Mit der dort beschriebenen Anordnung können bestimmte Webfehler erkannt werden. Aufgrund der Funktionsweise der dort beschriebenen Vorrichtung tritt jedoch üblicherweise das Problem auf, dass ein Fehler erst dann erkannt wird, wenn zwischen erstmaligem Auftreten des Webfehlers und einer Erkennung desselben einige Zentimeter Stoff gewebt wurden. Darüber hinaus sind manche Webfehler nicht bzw. nur problematisch zu erkennen. Auch hier existieren demzufolge noch Probleme.

Es besteht somit ein Interesse daran, eine Vorrichtung bzw. ein Verfahren zur Verfügung zu haben, welche bzw. welches ein schnelleres Erkennen eines Webfehlers, eine möglichst genaue Lokalisierung des Fehlers (insbesondere längs der Breite eines Webstücks und in Richtung eines Schussfadens des Webstücks) und/oder eine Erkennung einer grösseren Anzahl von Webfehlern ermöglicht.

Die Aufgabe der Erfindung besteht somit darin, eine Überwachungsvorrichtung für eine Webmaschine zur Verfügung zu stellen, die gegenüber Überwachungsvorrichtungen für Webmaschinen, wie sie im Stand der Technik bekannt sind, verbessert ist. Eine weitere Aufgabe der Erfindung besteht darin, eine Webmaschine vorzuschlagen, welche gegenüber Webmaschinen, wie sie im Stand der Technik bekannt sind, verbessert ist.

Darüber hinaus besteht eine Aufgabe der Erfindung darin, ein Verfahren zur Überwachung der Kettfaden einer Webmaschine vorzuschlagen, welches gegenüber Verfahren zur Überwachung der Kettfaden einer Webmaschine, wie sie im Stand der Technik bekannt sind, verbessert ist.

Die Erfindung löst diese Aufgabe mit den Merkmalen der Ansprüche 1 und 14.

Es wird vorgeschlagen, eine Überwachungsvorrichtung für eine Webmaschine gemäß des Anspruchs 1 derart auszubilden, dass diese zumindest eine Kameraeinrichtung und eine Schussfadenanschlagvorrichtung umfasst, wobei die Schussfadenanschlagvorrichtung dazu ausgebildet ist, in einer Webmaschine bei einer Bewegung von einer Rückposition in eine Anschlagposition einen Schussfaden in eine sich entlang einer Schussfadenanschlaglinie erstreckende Lage zu befördern. Dabei ist die mindestens eine Kameraeinrichtung mit der Schussfadenanschlagvorrichtung derart mechanisch verbunden, dass die mindestens eine Kameraeinrichtung bei einer Bewegung der Schussfadenanschlagvorrichtung mit der Schussfadenanschlagvorrichtung mitbewegt wird, wobei die mindestens eine Kameraeinrichtung dazu ausgebildet ist, ein Bild von Kettfäden derart aufzunehmen, dass das Bild eine Bildanalyse entlang einer im wesentlichen parallel zur Schussfadenanschlaglinie verlaufenden Richtung ermöglicht.

Für jede Aufnahme eines Bildes erzeugt die Kameraeinrichtung Bilddaten, die einer Darstellung des Bildes entsprechen und die analysiert werden, um verschiedene Webfehler auf den Kettfäden, aber eventuell auch auf den Schussfäden und auf dem Gewebe während eines Webvorgangs zu detektieren. Eine "Bildanalyse" des Bildes umfasst beispielsweise eine Analyse der von der Kameraeinrichtung bereitgestellten Bilddaten. Unter "Webvorgang" sollen in diesem Zusammenhang mehrere Schusseintragszyklen verstanden werden, die mit demselben Webblatt und demselben Einzugsrapport auf der Webmaschine ausgeführt werden (der Einzugsrapport enthält insbesondere für jeden Kettfaden einer Webkette eine Informationen darüber, in welchen derjenigen Durchgänge, die in dem jeweiligen Webblatt zur Durchführung von Kettfäden ausbildet sind, ein bestimmter Kettfaden der Webkette eingezogen ist).

Da das jeweilige Bild erfindungsgemäss eine Bildanalyse entlang einer im wesentlichen parallel zur Schussfadenanschlaglinie verlaufenden Richtung ermöglicht, ist gewährleistet, dass der jeweilige Webfehler mit grosser Genauigkeit lokalisiert werden kann, insbesondere mit Bezug auf eine Koordinatenachse, welche sich im Wesentlichen parallel zur Schussfadenanschlaglinie (z.B. parallel zu einer Längsrichtung der Schussfadenanschlagvorrichtung) erstreckt.

Die Kameraeinrichtung ist mit einen oder mehreren optischen Bildsensoren ausgestattet, welche beispielsweise als CCD-Einrichtung , CMOS-Einrichtung oder als Fotodiodenzeile ausgebildet sein können. Derartige Kameraeinrichtungen sind vergleichsweise leicht, energieverbrauchsarm und kommerziell erhältlich. Darüber hinaus weisen diese eine üblicherweise für Überwachungen in einer Webmaschine ausreichende optische Aufnahmegüte auf. In ersten Versuchen haben sich derartige Einrichtungen als geeignet für die vorliegend vorgeschlagene Überwachungsvorrichtung erwiesen.

Bei der Schussfadenanschlagvorrichtung handelt es sich um eine beliebige Vorrichtung, mit welcher ein neu eingeschossener Schussfaden bzw. eine Mehrzahl von neu eingeschossenen Schussfäden gegen einen bereits fertiggestellten Bereich eines Gewebes entlang einer Schussfadenschlaglinie während eines Webvorgangs bewegt werden kann. In einer Webmaschine erfolgt die Bewegung der Schussfadenschlagvorrichtung beim Weben in der Regel zwischen zwei Endpositionen (z.B. zwischen einer Rückposition und einer Anschlagposition, was im Folgenden detaillierter beschrieben wird) und kann insbesondere zumindest mit dem Webmaschinenantrieb oder mit einem unabhängigen Antrieb erzielt werden. Die Kameraeinrichtung kann ebenfalls im Wesentlichen beliebig ausgeführt sein, sofern sie geeignet ist, ein Bild eines Raumbereichs in der Umgebung der Schussfadenanschlagvorrichtung und besonders der Kettfäden aufzunehmen. Insbesondere ist unter einer "Kameraeinrichtung" nicht nur eine Kameraeinrichtung zu verstehen, welche mindestens teilweise im sichtbaren Spektralbereich des Lichts detektiert. Möglich ist es auch, dass eine Detektion beispielsweise im infraroten und/oder ultravioletten Bereich stattfindet. Erfindungsgemäss ist die Kameraeinrichtung mechanisch mit der Schussfadenanschlagvorrichtung verbunden, sodass die Kameraeinrichtung mit der Schussfadenanschlagvorrichtung mitbewegt wird, wenn die Schussfadenanschlagvorrichtung bewegt wird. Das heisst, dass diese der Bewegung der Schussfadenanschlagvorrichtung folgt, wenn die Schussfadenanschlagvorrichtung beispielsweise zwischen der Anschlagposition und der Rückposition hin- und herbewegt wird. Die Kameraeinrichtung wird an einem bestimmten Bereich der Schussfadenanschlagvorrichtung (bzw. mehreren Bereichen derselben) "starr" befestigt. Die Kameraeinrichtung folgt gewissermassen "eins zu eins" der Bewegung der Schussfadenanschlagvorrichtung auf der Webmaschine, was eine besonders hohe Messgüte zur Folge haben kann. Auf diese Weise ist mittels der Überwachungseinrichtung zumindest ein Teil der Breite des Raumbereichs einer Webmaschine, in welchem die zu webenden Kettfäden angeordnet sind (insbesondere in einem Bereich, in dem ein Webfach gebildet werden kann), und/oder der Breite der mittels der Webmaschine hergestellten Gewebe optisch erfassbar. Vorzugsweise erfolgt die Erfassung dabei derart, dass im Wesentlichen zu jedem Zeitpunkt zumindest 10 % der vorstehend genannten Breite erfassbar sind (zumindest in einem Regelbetrieb der Überwachungsvorrichtung). Dabei kann zumindest - zusätzlich zu einer Analyse des Bildes in einer im Wesentlichen parallel zu einer Schussfadenanschlaglinie verlaufenden Richtung - auch eine Analyse des Bildes in andere Richtungen erfolgen (beispielsweise in "Kettfadenrichtung", d.h. im Wesentlichen senkrecht zur Schussfadenanschlaglinie und parallel zum Gewebe, welche in einem Webvorgang aus den Kettfäden hergestellt wird). Denkbar ist es sogar, dass die Schussfadenanschlagvorrichtung für eine Detektion von Kettfadenbrüchen mit einer präzisen Lokalisierung des jeweiligen Kettfadenbruchs verwendet wird (anstelle einer konventionellen Detektion mittels Lamellen).

Die Kameraeinrichtung umfasst in der Regel einen Bildsensor, welcher eine Mehrzahl lichtempfindlicher, jeweils nebeneinander angeordneter Sensorelemente enthält, sodass der Bildsensor eine digitale Darstellung eines mit der Kameraeinrichtung aufzunehmenden, Bildes mit einer Mehrzahl nebeneinander angeordneter Bildpunkte (Pixel) liefert (wobei ein Pixel beispielsweise einem Sensorelement des Bildsensors entsprechen kann). Die Bildpunkte sind mindestens in einer Reihe angeordnet, die sich im Wesentlichen entlang einer parallel zu einer Schussfadenanschlaglinie verlaufenden Richtung erstreckt. Damit ist eine Bildanalyse entlang dieser Richtung möglich. Insbesondere ist es vorteilhaft, wenn die Ortsauflösung (Pixelgrösse) des Bildsensors derart gewählt wird, dass ein Kettfaden mit mehreren Bildpunkten dargestellt wird, welche in einer parallel zu einer Schussfadenanschlaglinie verlaufenden Richtung nebeneinander angeordnet sind . In diesem Fall kann also dezidiert festgestellt werden, welcher Kettfaden ein Problem hat. Unabhängig von der konkreten Ausführung der Überwachungsvorrichtung bzw. der Webmaschine hat die vorgeschlagene Überwachungsvorrichtung den Vorteil, dass Vibrationenbewegungen zwischen Kameraeinrichtung und Fäden/Gewebe beim Betrieb einer Webmaschine stark reduziert sind, da die Fäden bzw. das Gewebe an der Schussfadenanschlagvorrichtung jeweils an vorgegebenen Positionen gehalten werden (z.B. mittels eines Webblatts) und die Kameraeinrichtung derart an der Schussfadenanschlagvorrichtung befestigt ist, dass die Kameraeinrichtung während eines Webvorgangs keine andere Bewegung als eine Mitbewegung mit der Schussfadenanschlagvorrichtung hat. Dies ermöglicht eine automatische Bildverarbeitung eines mit einer derartigen Kameraeinrichtung aufgenommenen Bildes mit einer relativ kurzen Rechenzeit. Bei bekannten Überwachungsgeräten gemäss Stand der Technik (z.B. DE3435391) verändert sich die Position der Schussfadenanschlagvorrichtung der Kamera gegenüber wegen Schwingungen beim Betrieb der Webmaschine stark, deshalb benötigt eine automatische Bildverarbeitung eines mit einer derartigen Kamera aufgenommen Bildes in der Regel eine wesentliche längere Rechenzeit, weil zu Beginn der Bildverarbeitung in der Regel zunächst für jedes Bild eine räumliche Referenz bestimmt werden muss (um eine durch die jeweiligen Schwingungen verursachte Veränderung der räumlichen Lage der Kamera gegenüber der Schussfadenanschlagvorrichtung zu kompensieren) und eine Bestimmung dieser Referenz eine relativ lange Rechenzeit erfordert.

Darüber hinaus ist es dank der Bewegung der Kameraeinrichtung gemeinsam mit der Schussfadenanschlagvorrichtung auch möglich, Bilder in verschiedenen Positionen der Schussfadenanschlagvorrichtung innerhalb eines Schusseintragszyklus aufzunehmen, so dass ein zum Teil grösserer Raumbereich (insbesondere entlang der Kettfadenrichtung bzw. entlang der Längsrichtung von Kettfäden) optisch inspiziert werden kann. Auch dies hat Vorteile, weil die Orientierung der Kameraeinrichtung sich während Bewegung den Fäden und dem Gewebe gegenüber verändert, sodass beispielsweise die Möglichkeit besteht, verschiedene Fehler zu beobachten, zum Beispiel verschiedene Fehler, welche nur aus verschiedenen Perspektiven sichtbar sind. Insbesondere können hierdurch auch bestimmte Arten von Fehlern erkannt werden, die bislang zum Teil nur problematisch erkannt werden konnten (beispielsweise eine unerwünschte Änderung eines Durchmessers eines Faden, welche ausschliesslich in einer einzigen bestimmten Richtung ausgebildet sein kann, sodass diese Durchmesseränderung bei einer visuellen Inspektion nicht erkennbar ist, falls die Inspektion ausschliesslich in dieser einen Richtung erfolgt). Auch wenn die Kettfaden während eines Webvorgangs vibrieren, ist man sicher, mindestens ein richtig fokussiertes Bild innerhalb eines Schussfadeneintragszyklus zu erhalten, da die Perspektive der Kameraeinrichtung sich kontinuierlich verändert, wenn die Schussfadenanschlagvorrichtung bewegt wird (dabei verändert sich der Abstand der zu überwachenden Kettfäden relativ zur Kameraeinrichtung und ggf. zu einer abbildenden Optik der Kameraeinrichtung zur Abbildung der zu überwachenden Kettfäden auf einen Bildsensor der Kameraeinrichtung). Darüber hinaus haben die Erfinder festgestellt, dass durch die vorgeschlagene Anordnung eine verblüffend grosse Verbesserung der Inspektionsgüte realisiert werden kann.

Es wird weiterhin vorgeschlagen, die Schussfadenanschlagvorrichtung derart auszubilden, dass die Schussfadenanschlagvorrichtung zumindest eine der folgenden Einrichtungen umfasst: ein Webblatt oder eine Weblade oder alternativ eine Weblade und ein Webblatt. Falls die Schussfadenanschlagvorrichtung ein Webblatt und eine Weblade umfasst, kann das Webblatt beispielsweise an der Weblade befestigt sein. Die mechanische Kopplung zwischen der Kameraeinrichtung und einer der oben genannten Einrichtungen kann insbesondere durch eine direkte und unmittelbare mechanische Befestigung an der betreffenden Einrichtung erfolgen. Weist die Schussfadenanschlagvorrichtung zumindest ein Webblatt und/oder eine Weblade auf, so ähnelt diese Schussfadenanschlagvorrichtung weitgehend bislang bekannten Schussfadenanschlagvorrichtungen und ermöglicht den Anschlag eines Schussfadens an eine Schussfadenanschlaglinie, die sich vorzugsweise parallel zu der Längsrichtung des Webblatts oder der Weblade erstrecken kann. Andersherum gesagt: das Webblatt oder der Weblade befördert einen Schussfaden in eine sich entlang einer Schussfadenschlaglinie erstreckende Lage. Demgegenüber kann das vorliegend vorgeschlagene Webblatt bzw. die vorstehend beschriebene Weblade (jeweils zusammen mit der daran befestigten Kameraeinrichtung) auf vergleichsweise einfache Weise als Ersatz für ein bislang bekanntes Webblatt bzw. ein bisher bekannte Weblade dienen (beispielsweise als im Wesentlichen unmittelbarer Austausch, d.h. im Wesentlichen ohne jegliche Anpassungserfordernisse hinsichtlich der Webmaschine, insbesondere hinsichtlich des mechanischen Aufbaus der Webmaschine).

Die vorstehend genannte Variante hat den Vorteil, dass die Weblade bzw. das Webblatt das der Webzone am nächsten gelegene Element der Webmaschine ist, wobei die Webzone sich um der Schussfadenschlaglinie und dem Webfach befindet Die Webzone ist der beste (und letztmögliche) Eingriffspunkt bei der Entstehung eines Gewebes (durch Herstellung von "Bindungen" zwischen Kettfäden und Schussfäden), um Störungen bzw. Fehler zu erkennen und zu korrigieren. Alle statischen Elemente der Webmaschine sind von der Webzone relativ weit entfernt, und je näher die Kameraeinrichtung an der Webzone ist, desto besser wird die Qualität der Bilder und demzufolge die Qualität der Überwachung.

Im Falle der vorstehend genannten Variante der Überwachungsvorrichtung kann die Kameraeinrichtung derart angeordnet werden, dass (im Unterschied zum Stand der Technik gemäss DE3435391) zumindest einer der (Webblatt-) Bünde des Webblatts nicht auf den mit der Kameraeinrichtung aufgenommenen Bildern erscheinen kann und deshalb nichts auf den aufgenommenen Bildern von einem Webblattbund des Webblatts verdeckt werden kann.

Eine weitere mögliche Ausgestaltung der Überwachungsvorrichtung ergibt sich, wenn eine Mehrzahl an Kameraeinrichtungen vorgesehen ist. Diese Mehrzahl von Kameraeinrichtungen sind in einer sich parallel zu der Schussfadenschlaglinie erstreckenden Längsrichtung angeordnet. Die Schussfadeanschlagvorrichtung erstreckt sich in der Regel in einer sich parallel zu der Schussfadenschlaglinie erstreckenden Richtung und hat dementsprechend eine Längsrichtung, welche sich im Wesentlichen parallel zu der Schussfadenschlaglinie erstreckt. Die Kameraeinrichtungen können deshalb zweckmässigerweise in einer Reihe entlang der Längsrichtung der Schussfadeanschlagvorrichtung angeordnet sein. Damit ist eine Bildanalyse entlang der Längsrichtung möglich. Dabei können die Bildbereiche der Kameraeinrichtungen bereichsweise miteinander überlappend ausgeführt sein, bevorzugt mindestens in der Längsrichtung der Schussfadeanschlagvorrichtung überlappend ausgeführt sein (unter dem Begriff "Bildbereich" einer Kameraeinrichtung soll in diesem Zusammenhang derjenige Raumbereich verstanden werden, von welchem mittels der jeweiligen Kameraeinrichtung ein Bild aufnehmbar ist). Insbesondere können zumindest zwei der Kameraeinrichtungen derart nebeneinander angeordnet sein, dass sich die Bildbereiche dieser zwei Kameraeinrichtungen überlappen. Vorzugsweise können die Bildbereiche von jeweils zwei Kameraeinrichtungen, welche unmittelbar nebeneinander angeordnet (d.h. benachbart) sind, überlappen. Wenn die Bildbereiche mehrerer Kameraeinrichtungen bereichsweise miteinander überlappend sind, können die einzelnen Kameraeinrichtungen vorteilhafterweise jeweils beispielsweise einfacher, kleiner und kostengünstiger als eine andere (grössere) Kameraeinrichtung, welche allein im Wesentlichen ein Bild desselben Raumbereichs aufnehmen soll wie die Gesamtheit aller Kameraeinrichtungen der genannten Mehrzahl von Kameraeinrichtungen, ausgebildet werden und gegebenenfalls (auch in Summe) ein geringeres Gewicht aufweisen. Wenn die Bildbereiche der Kameraeinrichtungen bereichsweise miteinander überlappen, kann auf vorteilhafte Weise verhindert werden, dass optische Inspektionslücken entstehen, die beispielsweise dazu führen könnten, dass ein Webfehler unerkannt bleibt. Der Überlapp kann beispielsweise jeweils nur randseitig in Bezug auf jeweils zwei zueinander benachbarte Bildbereiche zweier nebeneinander angeordneter Kameraeinrichtungen gegeben sein (beispielsweise Überlapp pro Randseite ≤ 30 %, 20 %, 15 %, 10 %, 5 % einer Breite des Bildbereichs einer einzelnen Kameraeinrichtung).

Für den Fall, dass an der Schussfadenanschlagvorrichtung eine Mehrzahl von Kameraeinrichtungen befestigt sind, ist es vorteilhafterweise möglich, eine Kalibrierung der mit verschiedenen Kameraeinrichtungen aufgenommen Bilder durchzuführen. Zu diesem Zweck kann eine normierte Messskala, welche eine Vielzahl von Referenzmarkierungen aufweist, deren Positionen auf der Messskala genau bekannt sind, derart relativ zu den Kameraeinrichtungen angeordnet werden, dass in den Bildbereich jeder Kameraeinrichtung eine oder vorzugsweise mehrere der Referenzmarkierungen fallen. Anschliessend wird mit jeder der Kameraeinrichtungen ein Bild der Messskala aufgenommen und die mit den verschiedenen Kameraeinrichtungen aufgenommenen Bilder ausgewertet, insbesondere hinsichtlich der Anordnung und/oder der Grösse der auf den Bildern jeweils abgebildeten Referenzmarken. Diese Auswertung der Bilder ermöglicht es, für jede Kameraeinrichtung die jeweilige Position relativ zur Messskala zu ermitteln und weiterhin die räumliche Lage verschiedener Kameraeinrichtungen der Schussfadenanschlagvorrichtung gegenüber zu bestimmen. Die Kalibrierung kann in einer räumlichen Dimension oder in zwei räumlichen Dimensionen ausgeführt werden, beispielsweise können zur Kalibrierung Messskalen verwendet werden, auf denen mehrere Referenzmarkierungen jeweils hintereinander in einer räumlichen Dimension oder verteilt in zwei räumlichen Dimension angeordnet sind. Eine besonders genaue Kalibrierung ist möglich, wenn sich die Bildbereiche benachbarter Kameraeinrichtungen überlappen. In diesem Fall ist es vorteilhaft, eine Messskala mit Referenzmarkierungen derart anzuordnen, dass jeweils zumindest eine Referenzmarkierung im Bereich der Überlappung der Bildbereiche jeweils zweier benachbarter Kameraeinrichtungen fällt, sodass mit jeweils zwei Kameraeinrichtungen jeweils ein Bild derselben Referenzmarkierung aufgenommen werden kann. Durch eine Auswertung der mit verschiedenen Kameraeinrichtungen aufgenommen Bilder derselben Referenzmarkierung kann somit die relative Anordnung von jeweils zwei benachbarten Kameraeinrichtungen bestimmt werden. Diese Information kann anschliessend bei einer automatischen Verarbeitung von Bildern eines beliebigen Objekts, welches mit den Kameraeinrichtungen aufgenommen wurde, verwendet werden, um durch eine Auswertung der Bilder die Position des Objekts relativ zu den Kameraeinrichtungen präzise zu bestimmen.

Nach der vorstehend genannten Kalibrierung benötigen die Kameraeinrichtungen keine räumliche Referenz mehr, um die Position jedes einzelnen der in ein Webblatt eingezogenen Kettfäden für den ganzen Webvorgang zu erkennen, wenn die Kameraeinrichtungen erfindungsgemäss an der Schussfadenanschlagvorrichtung starr befestigt sind, zumal die Kameraeinrichtungen in der Regel Bilder von mehreren in einer Webmaschine nebeneinander liegenden Kettfäden aufnehmen können und jeder Kettfaden in der Regel durch jeweils zwei benachbarte Rietzähne des Webblatts im Raum (jeweils in Schussrichtung) eingeschränkt ist. Da in der Regel durch den Einzugsrapport für den ganzen Webvorgang individuell für jeden einzelnen Kettfaden der Webkette festgelegt wird, zwischen welchen Rietzähnen des Webblatts der jeweilige Kettfaden eingezogen wird, ist es möglich, eine Zuordnung der Kettfäden durchzuführen, bei welcher jedem zu überwachenden Kettfaden mindestens einer der Bildpunkte zugeordnet wird, d.h. nach Durchführung der genannten Zuordnung ist für den gesamten Webvorgang klar, welcher der Kettfäden mit welchen Bildpunkten des jeweiligen Bildes dargestellt werden kann.

Bei einer Weiterentwicklung der vorstehend genannten Ausführungsformen der Überwachungsvorrichtung sind zumindest zwei der Kameraeinrichtungen und mindestens eine Beleuchtungseinrichtung in einem Modul angeordnet, wobei dieses Modul ausserdem zumindest umfasst: eine gemeinsame Bild-Steuerungseinrichtung zum Ansteuern der mindest zwei Kameraeinrichtungen, um diese zumindest zwei der Kameraeinrichtungen zumindest dazu zu veranlassen, Bilder aufzunehmen, und/oder eine gemeinsame Bildverarbeitungseinrichtung zur Verarbeitung der von diesen zumindest zwei der Kameraeinrichtungen aufgenommenen Bilder. Dieses Modul ist mit der Schussfadenanschlagvorrichtung mechanisch verbunden sein und insbesondere an der Schussfadenanschlagvorrichtung befestigt. Zu diesem Zweck wird vorgeschlagen, alle in dem Modul enthaltenen Komponenten (mindestens zwei Kameraeinrichtungen, gegebenenfalls eine gemeinsame Bild-Steuerungseinrichtung, gegebenenfalls eine gemeinsame Bildverarbeitungseinrichtung, gegebenenfalls mindestens eine Beleuchtungseinrichtung) beispielsweise gemeinsam auf einer Trägerstruktur zu montieren, die mit der Schussfadenanschlagvorrichtung mechanisch verbunden ist bzw. verbunden wird. Im Falle eines Ausfalls eines einzelnen Moduls muss nur ein Ersatzteil für das Modul vorhanden sein und dann in vergleichsweise kurzer Zeit als Ersatz für das ausgefallene Modul bereitgestellt werden. Dies ermöglicht eine deutliche Verringerung der Stillstandszeit der Webmaschine und ist entsprechend vorteilhaft. Dazu ist es vorteilhaft, die Zahl der Bildverarbeitungseinrichtungen und der Bild-Steuerungseinrichtungen zu reduzieren und zu diesem Zweck eine Bildverarbeitungseinrichtung und eine Bild-Steuerungseinrichtung mit beispielsweise 2 bis 8 Kameraeinrichtungen zu verbinden.

Die Beleuchtungseinrichtung, welche beispielsweise eine Anordnung von Leuchtdioden (LED) umfassen kann, kann vorzugsweise dazu ausgebildet sein, Licht mit unterschiedlichen Lichtfarben und/oder einem breiten Spektralbereich zu erzeugen, mit einer Beleuchtungszeit kleiner als die Schwingungsperiode der Webmaschine, wobei die zumindest eine Beleuchtungseinrichtung bevorzugt mechanisch mit der Schussfadenanschlagvorrichtung gekoppelt ist, insbesondere mechanisch mit zumindest einer Kameraeinrichtung gekoppelt ist. Auf diese Weise kann eine für einen bestimmten Inspektionszweck (z.B. für die Suche nach einem bestimmen Webfehler) und/oder die jeweilige Kameraeinrichtung optimierte Beleuchtung auf einfache und energieeffiziente Weise realisiert werden. Darüber hinaus kann bei einer derartigen Ausbildung der Beleuchtungseinrichtung eine besonders gleichmässige Beleuchtungsgüte realisiert werden, auch dann, wenn die Schussfadenanschlagvorrichtung bewegt wird. Vorteilhaft ist es auch, dass, wenn unterschiedliche Kameraeinrichtungen an der Schussfadenanschlagvorrichtung angeordnet werden, jeweils mithilfe unterschiedlicher Beleuchtungseinrichtungen eine jeweils optimierte Beleuchtung realisiert werden kann.

Weiterhin sei darauf hingewiesen, dass die Beleuchtungseinrichtung beim Betrieb der Webmaschine (falls die Schussfadenanschlagvorrichtung bewegt und die Beleuchtungseinrichtung entsprechend mitbewegt wird), gegenüber den Kettfäden, den Schussfäden und dem Gewebe mobil ist, so dass die jeweiligen Fäden bzw. das Gewebe zeitlich nacheinander unter verschiedenen Beleuchtungswinkeln beleuchtet werden kann. Vorteilhafterweise gibt es verschiedene Beleuchtungswinkel, die geeignet sind, verschiedene Fehler sichtbar zu machen und somit zu bestimmen.

Vorgeschlagen wird weiterhin, dass bei der Schussfadenanschlagvorrichtung zumindest eine Erschütterungsdämpfungseinrichtung zwischen der Kameraeinrichtung und der Schussfadenanschlagvorrichtung angeordnet wird. Mit einer Erschütterungsdämpfungseinrichtung kann die mechanische Belastung, insbesondere auf die Kameraeinrichtung (gegebenenfalls auch auf Zusatzkomponenten wie elektronische Bildverarbeitungseinrichtungen und dergleichen) verringert werden, sodass die Standzeit derselben zum Teil deutlich erhöht werden kann. Die Erschütterungsdämpfungseinrichtung kann beispielsweise unter Verwendung von elastisch verformbaren Elementen realisiert werden (Art Gummipufferelemente oder dergleichen). Wenn die Kameraeinrichtung auf einer Trägerstruktur angeordnet ist, kann die Erschütterungsdämpfungseinrichtung zwischen der Trägerstruktur und der Schussfadenanschlagvorrichtung oder zwischen der Trägerstruktur und jeder Kameraeinrichtung angeordnet werden.

Weiterhin wird vorgeschlagen, für die Kameraeinrichtung eine Justageeinrichtung vorzusehen, welche es ermöglicht, die Kameraeinrichtung relativ zur Schussfadenanschlagvorrichtung vor dem Webvorgang zu justieren. In diesem Fall kann die Lage der Kameraeinrichtung relativ zur Schussfadenanschlagvorrichtung oder zumindest zu Teilen der Schussfadenanschlagvorrichtung (beispielsweise relativ zu einem Webblatt, einer Weblade oder einer anderen strukturellen Komponente der Schussfadenanschlagvorrichtung) oder zu einem Gewebe auf einfache Weise korrigiert und optimiert werden. Denkbar sind hier beispielsweise Stellschrauben und dergleichen.

Weiterhin wird vorgeschlagen, die Überwachungsvorrichtung derart auszubilden, dass zumindest eine Bildverarbeitungseinrichtung zum Verarbeiten eines von der Kameraeinrichtung aufgenommenen Bildes, insbesondere zumindest eine Bildvorverarbeitungseinrichtung, und ein Datenspeicher, welcher mit der Bildverarbeitungseinrichtung in Datenverbindung steht, vorhanden sind. Die Bildverarbeitungseinrichtung und der Speicher sind dabei vorzugsweise mit der Schussfadenanschlagvorrichtung mechanisch verbunden. Die Bildverarbeitungseinrichtung und der Speicher können auch gemeinsam mit der Kameraeinrichtung ausgebildet sein. Die Bildverarbeitungseinrichtung und der Datenspeicher sollten dabei gewissermassen zusammen mit der Schussfadenanschlagvorrichtung mitbewegt werden. Da die Schussfadenanschlagvorrichtung im betriebsfähigen Zustand regelmässig bewegt wird, wäre es zunächst erforderlich, dass eine "bewegliche" (also beispielsweise biegbare, stauchbare und dergleichen) und breitbandige Datenverbindung zwischen Schussfadenanschlagvorrichtung und sonstiger Vorrichtung (also beispielsweise der "restlichen Webmaschine", insbesondere dem Gehäuse bzw. dem Halterahmen einer Webmaschine) vorgesehen werden müsste. Speziell für den Fall von besonders hohen Datenübertragungsraten ist dies jedoch nicht unproblematisch. Beispielsweise könnte eine Koaxialleitung, ein Glasfaserkabel oder eine sonstige Datenleitung, die für die Übertragung hochfrequenter Datenraten geeignet ist, vorhanden sein. Die Bildverarbeitungseinrichtung kann insbesondere derart ausgebildet sein, dass diese eine Verarbeitung der von der Kameraeinrichtung erzeugten Bilddaten vornimmt, insbesondere derart, dass die zu verarbeitende Datenmenge reduziert wird und/oder dass die Bilddaten schon mit Algorithmen analysiert werden. Zur Analyse eines aufgenommenen Bildes kann die Bildverarbeitungseinrichtung beispielsweise Bilddaten mit im Datenspeicher gespeicherten Daten bzw. Informationen (beispielsweise Daten, welche einen Einzugsrapport und/oder Bindungsinformationen für ein herzustellendes Gewebe spezifizieren) vergleichen, um Webfehler zu detektieren. Insbesondere kann diese von der Bildverarbeitungseinrichtung durchgeführte Bildanalyse eine Information über die Position des Webfehlers mit Bezug auf eine Achse eines Koordinatensystems ermitteln, welche sich im Wesentlichen parallel zur Längsrichtung der Schussfadenanschlagvorrichtung bzw. parallel zur Schussfadenanschlaglinie erstreckt. Durch eine Reduktion der Datenmenge kann dabei die Verarbeitungsgeschwindigkeit erhöht werden, sodass insbesondere auch annähernde "Echtzeit-Datenverarbeitung" möglich ist. Hierbei kann es sich um Bildkompressionsalgorithmen handeln, um ein "Herausschneiden" der relevanten Bildinformationen oder um eine "vollständige Bildbearbeitung", bei der nur noch das Ausgabesignal zu kommunizieren ist (also dass beispielsweise eine Fehlerfreiheit innerhalb des tolerierbaren Rahmens vorliegt oder dass ein Fehler vorliegt und, vorzugsweise, wo dieser vorliegt). Der Vollständigkeit halber sollte erwähnt werden, dass es auch möglich ist, dass bei einer zusammen mit der Schussfadenanschlagvorrichtung bewegten Bildverarbeitungseinrichtung nur eine Vorverarbeitung stattfindet und eine Endverarbeitung zum Ausgabesignal in einem zweiten Schritt an einem anderen Ort (beispielsweise in einer Steuereinrichtung einer Webmaschine) erfolgt. Der Speicher, der auch mit der Kameraeinrichtung bewegt wird und der mit der Bildverarbeitungseinrichtung in Datenverbindung ist, hilft dazu, die Vorverarbeitung der Daten zu führen, indem er für die Vorverarbeitung notwendige Eingabedaten und/oder Ergebnisse dieser Vorverarbeitung speichert.

Eine weitere bevorzugte Ausführungsform der Überwachungsvorrichtung umfasst eine Datenübertragungseinrichtung zur drahtlosen Datenübertragung. Diese Datenübertragungseinrichtung kann beispielsweise ausgebildet sein, diejenigen Daten drahtlos zu übertragen, welche direkt von der Kameraeinrichtung (Rohdaten) geliefert werden oder welche von Bildverarbeitungseinrichtung bereitstellbar sind (insbesondere verarbeitete Daten, welche von der Bildverarbeitungseinrichtung generiert werden, und welche beispielsweise ein Ergebnis einer Analyse eines aufgenommenen Bildes entsprechen). Zumindest eine der erforderlichen "Datenübertragungsstationen" ist dabei bevorzugt mechanisch mit der Schussfadenanschlagvorrichtung verbunden und bewegt sich daher gemeinsam mit dieser. Diese drahtlose Datenübertragungseinrichtung hat die Aufgabe, Bilddaten, welche von der Kameraeinrichtung bereitgestellt werden können, oder Daten, welche von der Bildverarbeitungseinrichtung durch eine Verarbeitung der Bilddaten als Ergebnis einer Analyse der Bilddaten erzeugt werden, von der Schussfadenanschlagvorrichtung zu sonstigen Vorrichtungen (z.B. zu einer anderen Bildverarbeitungseinrichtung oder einer Steuereinrichtung), welche entfernt von der Schussfadenanschlagvorrichtung angeordnet sein können (z.B. im Halterahmen der Webmaschine), zu senden und eventuell Daten von dieser sonstigen Vorrichtung zu empfangen. Hierdurch wird das Problem von kabelgebundener Datenübertragung zwischen der jeweiligen Bildverarbeitungsvorrichtung und der restlichen Webmaschine vermieden. Eine drahtlose Datenübertragung ist bei den vorliegenden Entfernungen und Entfernungsänderungen im Wesentlichen unempfindlich.

Eine weitere bevorzugte Ausführungsform der Überwachungsvorrichtung ergibt sich, wenn zumindest zusätzlich eine Sensoreinrichtung, welche (im Gegensatz zu einem optischen Bildsensor der Kameraeinrichtung) nicht unmittelbar der Aufnahme eines der Bilder dient und welche sich von der Kameraeinrichtung unterscheidet, an der Schussfadenanschlagvorrichtung befestigt ist und mit der Bildverarbeitungseinrichtung und/oder mit einer Bild-Steuerungseinrichtung (zum Ansteuern einer oder mehrerer Kameraeinrichtungen, um die jeweilige Kameraeinrichtung zum Aufnehmen eines Bildes zu veranlassen) in Datenverbindung ist, um beispielsweise der Bild-Steuerungseinrichtung und/oder der Bildverarbeitungseinrichtung Informationen zu geben, welche von der Sensoreinrichtung bereitgestellt werden können. Mithilfe dieser Informationen ist eine momentane Position der Schussfadenanschlagvorrichtung bestimmt. Bei der Sensoreinrichtung kann es sich um eine Positionsermittlungseinrichtung und/oder eine Beschleunigungsermittlungseinrichtung und/oder eine Erschütterungsermittlungseinrichtung und/oder eine Lageermittlungseinrichtung handeln. Dabei wird darauf hingewiesen, dass es selbstverständlich möglich ist, dass die zusätzliche Sensoreinrichtung auch (teilweise) optischer Art ist. Unabhängig von der speziellen Ausführung der zusätzlichen Sensoreinrichtung kann hierdurch eine Information über eine Bewegung und/oder die momentane Position (Bewegungsposition) der Schussfadenanschlagvorrichtung in einer Webmaschine (insbesondere während eines Betriebs der Webmaschine) gewonnen werden. Beispielsweise ist mithilfe einer Positionsermittlungseinrichtung die Position der Schussfadenanschlagvorrichtung zu ermitteln und damit gegebenenfalls auch die Position eines eventuell auftretenden Webfehlers (insbesondere in einer Richtung parallel zur Kettfadenrichtung bzw. im Wesentlichen senkrecht zu den Schussfäden). Eine Positionsermittlung kann im Übrigen auch durch "alternative Messmethoden" erzielt werden, wie beispielsweise durch eine Beschleunigungsermittlungseinrichtung, eine Erschütterungsermittlungseinrichtung und/oder eine Lageermittlungseinrichtung. So ist es beispielsweise möglich, dass mit einer Beschleunigungsermittlungseinrichtung die beiden Endpositionen der Bewegung der Schussfadenanschlagvorrichtung ermittelt werden, und die momentane Position der Schussfadenanschlagvorrichtung kann beispielsweise mit Extrapolationsverfahren oder dergleichen in der Bild- Steuerungseinrichtung und/oder in der Bildverarbeitungseinrichtung zumindest annähernd bestimmt werden. Die damit erzielbare Genauigkeit erweist sich oftmals als ausreichend.

Somit braucht die Bild- Steuerungseinrichtung bzw. die Bildverarbeitungseinrichtung hinsichtlich der momentanen Position der Schussfadenanschlagvorrichtung keine Positionsinformation, die von der Webmaschine bzw. einem Steuergerät der Webmaschine kommt, um das Aufnehmen von Bildern und/oder eine weitere Verarbeitung der jeweils aufgenommenen Bilder in Abhängigkeit von der momentanen Position der Schussfadenanschlagvorrichtung relativ zur Schussfadenanschlaglinie zu steuern.

Eine weitere bevorzugte Ausbildungsform der Überwachungsvorrichtung ist mit einer Synchronisierungseinheit versehen, welche dazu ausgebildet ist, die Kameraeinrichtung mit einer momentanen Position der Schussfadenanschlagvorrichtung zu synchronisieren, um die Kameraeinrichtung in Abhängigkeit von einer bestimmten Bewegungsposition der Schussfadenanschlagvorrichtung zu steuern. Die Synchronisierungseinheit ermöglicht es, mindestens einen Betriebsvorgang der Kameraeinrichtung, z.B. das Aufnehmen eines Bildes und insbesondere einen Zeitpunkt, an dem das jeweilige Bild aufgenommen werden soll, zeitlich mit einer Bewegung der Schussfadenanschlagvorrichtung abzustimmen und diesen mindestens einen Betriebsvorgang in Abhängigkeit von einer Bewegungsposition der Schussfadenanschlagvorrichtung zu steuern. Damit ist es möglich, an verschiedenen vorgegebenen Positionen der Schussfadenschlagvorrichtung jeweils Bilder aufzunehmen und in Abhängigkeit von der Position, an der das Bild aufgenommen wird, zu analysieren.

Weiterhin wird vorgeschlagen, die Überwachungsvorrichtung derart auszubilden, dass sich die Gesamtheit "aller Bildbereiche der jeweiligen Kameraeinrichtungen über einen Bereich einer Webmaschine erstrecken, welcher derart bemessen ist, dass sich im Wesentlichen jeder der in der Webmaschine vorhandenen Kettfäden durch zumindest einen Bildbereich einer der Kameraeinrichtungen erstrecken. Im Falle dieser Ausführungsform der Überwachungsvorrichtung kann demnach im Wesentlichen jeder Kettfaden einer Webkette (auch Kettfäden, die die Webkante bilden) auf zumindest einem Bild von zumindest einer Kameraeinrichtung abgebildet werden und somit von der Überwachungsvorrichtung überwacht werden. In diesem Fall erstreckt sich somit der Raumbereich, in welchem Kettfäden oder ein Gewebe mittels der Überwachungsvorrichtung überwacht werden können (im Folgenden "Überwachungsbereich der Überwachungsvorrichtung" genannt), im Wesentlichen über die gesamte Breite der Webkette ("Kettbreite") bzw. die gesamte Breite eines Gewebes). Eine derartige Überwachungsvorrichtung kann gegebenenfalls auch mittels einer einzigen Kameraeinrichtung realisiert werden, sofern der Bildbereich der Kamerareinrichtung entsprechend gross ist und sich im Wesentlichen über die gesamte Kettbreite bzw. die gesamte Breite des Gewebes erstreckt. Die vorstehend genannte Ausführungsform kann beispielsweise dadurch realisiert werden, dass die Schussfadenanschlagvorrichtung einen Längsabschnitt aufweist, an welchem eine Mehrzahl von Durchgängen für Kettfäden zwischen den Rietzähnen eines Webblatts derart ausgebildet sind, dass die Durchgänge in der Längsrichtung der Schussfadenanschlagvorrichtung in einer Reihe hintereinander angeordnet sind, wobei die Kameraeinrichtungen derart hintereinander angeordnet sind, dass sich die Gesamtheit aller Bildbereiche der Kameraeinrichtungen in einer Richtung parallel zur Schussfadenanschlaglinie über eine Distanz erstrecken, welche grösser oder gleich der Länge desjenigen Längsabschnitts der Schussfadenanschlagvorrichtung ist, in welchem die Durchgänge ausgebildet sind.

Erstreckt sich der Überwachungsbereich der Überwachungsvorrichtung (im Wesentlichen) über den gesamten Längsabschnitt der Schussfadenanschlagvorrichtung, an welchem die Durchgänge für die Kettfäden ausgebildet sind, so können bei der Überwachung "blinde Stellen" vermieden werden. Mit anderen Worten kann mit hoher Wahrscheinlichkeit vermieden werden, dass Webfehler unentdeckt bleiben. Dies erweist sich in aller Regel als besonders wirtschaftlich.

In einer Variante hat sich die Anordnung einer Kameraeinrichtung in einem Seitenbereich der gesamten Webkette ("Kettbreite") bzw. des gesamten Gewebes als vorteilhaft erwiesen. Als "Seitenbereich" kann dabei insbesondere eine Webkante verstanden werden.

Weiterhin wird vorgeschlagen, die Überwachungsvorrichtung derart auszubilden, dass die Kameraeinrichtung mit einem Bund eines Webblatts mechanisch verbunden ist. Sie ist derart angeordnet, dass sich die Kameraeinrichtung stets ausserhalb des Raumbereichs ("Fachöffnungszone") befindet, durch welchen die Kettfaden beim Öffnen oder Schliessen eines Webfachs während eines Webvorgangs bewegt werden können, d.h. ausserhalb der "Fachöffnungszone", befindet. Beispielsweise kann eine Kameraeinrichtung auf einem oberen (ersten) Bund oder unteren (zweiten) Bund oder auf beiden Bünden des Webblatts positioniert werden. Kameraeinrichtungen und weiter strukturelle Elemente, die an der Schussfadenanschlagvorrichtung befestigt sind, wie z.B. eine Beleuchtung oder eine Trägerstruktur, bleiben ausserhalb der Fachöffnungszone während des Webvorgangs in jeder Position des Webblatts in der Webmaschine. Sie bleiben ausserhalb von Durchgängen der Kettfäden zwischen den Rietzähnen (Webblattzähne), welche im Falle eines konventionellen Webblatts in einer Reihe hintereinander angeordnet sind und sich zwischen dem oberen (ersten) Bund und dem unteren (zweiten) Bund des Webblatts erstrecken. Entsprechende Vorteile werden für den Fall erreicht, dass das Webblatt eine Mehrzahl von Durchgängen für Kettfäden aufweist, welche Durchgänge sich jeweils zwischen einem ersten Bund des Webblatts und einem zweiten Bund des Webblatts erstrecken, und die Kameraeinrichtung derart am ersten Bund oder am zweiten Bund angeordnet ist, dass die Kameraeinrichtung keinen der Durchgänge ganz oder teilweise versperrt oder einschränkt.

Weiterhin wird vorgeschlagen, eine Webmaschine mit zumindest einer Schussfadenanschlagvorrichtung gemäss der vorherigen Beschreibung auszubilden.

Möglich ist es insbesondere, eine Webmaschine derart weiterzubilden, dass diese zumindest eine Steuereinrichtung aufweist, wobei die Steuereinrichtung zur Ansteuerung von zumindest einer Komponente der Webmaschine ausgebildet ist. Bei einer derartigen Komponente der Webmaschine kann es sich insbesondere um zumindest eine Schussfadenanschlagvorrichtung, und/oder zumindest eine Schussfadendurchführungseinrichtung, und/oder zumindest eine Schussfadenliefereinrichtung, und/oder zumindest eine Webfachbildungseinrichtung und/oder zumindest eine Kettfadentransporteinrichtung und/oder zumindest eine Gewebetransporteinrichtung handeln, deren Bewegungen mit der Steuereinrichtung gesteuert werden. Diese Steuereinrichtung bekommt direkt oder indirekt Daten von der Kameraeinrichtung. Der Begriff "indirekt" bedeutet in diesem Zusammenhang, dass die Steuereinrichtung Daten empfängt, welche aus ursprünglich von der Kameraeinrichtung bereitgestellten Daten hervorgehen als Ergebnis einer Vorverarbeitung bzw. einer Verarbeitung der Daten mit einer entsprechenden Vorverarbeitungseinrichtung oder Verarbeitungseinrichtung. Bei einer derartigen Ausbildung der Webmaschine ist es möglich, dass die unter Verwendung der Kameraeinrichtung (und eventuell auch einer sonstigen Sensoreinrichtung, wie insbesondere einer zusätzlichen Sensoreinrichtung vom vorab beschriebenen Typ) gewonnen Daten, unmittelbar und gegebenenfalls auch ohne Benutzereingriff verwendet werden können. Möglich ist es beispielsweise, dass es sich um eine Art "Notstoppeinrichtung" handelt, sodass insbesondere beim Auftreten bestimmter Fehler bzw. in einem Fall, in dem ein gewisser Fehlertoleranzbereich überschritten wird, eine sofortige Abschaltung des weiteren Webvorgangs erfolgt. In einem derartigen Fall kann der Maschinenbediener geeignete Korrekturmassnahmen ergreifen und anschliessend den Webvorgang (automatisiert) fortführen. Möglich ist es aber ebenso, dass "korrektive" Massnahmen unternommen werden, also dass die Maschinensteuerung derart angepasst wird, dass der aufgetretene Fehler verringert und vorzugsweise auf "null zurückgeführt" wird. Dies ist insbesondere dann sinnvoll, wenn ein bestimmtes Fehlertoleranzintervall noch nicht verlassen wurde. Bei einer derartigen Ausgestaltung der Webmaschine können oftmals an sich unnötige Maschinenstillstandszeiten vermieden werden, was die Wirtschaftlichkeit der Vorrichtung deutlich erhöhen helfen kann.

Weiterhin wird vorgeschlagen, die Webmaschine derart auszubilden, dass diese zumindest eine Fehleranzeigevorrichtung, insbesondere zumindest eine optische Fehleranzeigevorrichtung aufweist. Hierbei kann es sich nicht nur um eine Vorrichtung handeln, die "binär" anzeigt, ob ein Fehler vorhanden ist oder nicht. Bevorzugt ist es, wenn die Fehleranzeigevorrichtung zumindest näherungsweise anzeigt, wo der Fehler aufgetreten ist. Hier kann es sich beispielsweise um ein Symbolbild auf einem Bildschirm handeln, der die Position des Fehlers anzeigt. Möglich ist es auch, dass beispielsweise unmittelbar über dem Webfachbereich eine Art Lichtzeigeeinrichtung befestigt ist, die nach dem Auftreten eines Fehlers derart angesteuert wird, dass ein Lichtfleck, ein Lichtbereich, ein Pfeil oder eine sonstige, sinnvolle Symbolik den Ort eines Fehlers anzeigt. Hierbei kann es sich beispielsweise um eine Art Bereich handeln (beispielsweise Anzeige auf einen Bereich von fünf oder zehn Kettfäden genau). Ebenso ist es aber auch möglich, dass die Ansteuerung derart erfolgt, dass die Anzeige "auf den Kettfaden genau" erfolgt. Zusätzlich oder alternativ kann nicht nur eine Anzeige entlang der Breite bzw. in Richtung der Schussfadenanschlaglinie, sondern auch entlang des Kettfadens erfolgen. Möglich ist es, dass es sich bei der Fehleranzeigevorrichtung um eine vorzugsweise ohnehin vorzusehende Beleuchtungseinrichtung handelt, die beispielsweise lediglich auf geeignete Weise angesteuert wird (Bestromung von lediglich Teilen der Beleuchtungseinrichtung oder dergleichen). Hierbei kann es sich auch um die bereits vorab beschriebene Beleuchtungseinrichtung, die auch für das Aufnehmen von Bildern mittels der Kameraeinrichtung benutzt wird (um eine Umgebung der Kameraeinrichtung zu beleuchten), handeln. Es soll daher auch möglich sein, die Fehleranzeigevorrichtung lediglich im Zusammenhang mit der Schussfadenanschlagvorrichtung (und ohne sonstige Komponenten der Webmaschine bzw. die Webmaschine selbst) beanspruchen zu können.

Weiterhin wird ein Verfahren zur (optischen) Überwachung mindestens von Kettfäden einer Webmaschine mit einer Kameraeinrichtung gemäß Anspruch 14 vorgeschlagen, wobei die Kameraeinrichtung bei einer Bewegung einer Schussfadenanschlagvorrichtung der Webmaschine mit der Schussfadenanschlagvorrichtung mitbewegt wird und die Kameraeinrichtung ein Bild an zumindest einer bestimmten Position der Schussfadenanschlagvorrichtung während eines Webvorgangs aufnimmt.

Eine Synchronisierungseinheit wird benutzt, um die Beleuchtung und die Aufnahme von Bildern mittels der Kameraeinrichtung in Abhängigkeit von einer bestimmten Position der Schussfadenanschlagvorrichtung zu steuern und jedes aufgenommene Bild mit einem Zeitstempel zu versehen (beispielsweise mit einer digitalen Signatur, welche den jeweiligen Zeitpunkt der Aufnahme des Bildes enthält). Dafür braucht die Synchronisierungseinheit eine Information über die aktuelle Position des Bindungsrapports, Eingabedaten wie die gewünschte Webblattposition für jedes aufzunehmende Bild für jeden Schussfadeneintragszyklus und Informationen über die momentane Position der Schussfadenanschlagvorrichtung eventuell von der Sensoreinrichtung (z.B. Beschleunigungsmesser zur Bestimmung einer Beschleunigung der Schussfadenanschlagvorrichtung), die Informationen über die richtige Position oder die Bewegung der Schussfadenanschlagvorrichtung und der jeweiligen Kameraeinrichtung bereitstellt.

Das erfindungsgemässe Verfahren kann dabei zumindest in Analogie die gleichen Eigenschaften und Vorteile aufweisen, wie die bereits vorab beschriebenen erfindungsgemässe Überwachungsvorrichtungen. Insbesondere ist es möglich, einen bestimmten Raumbereich der Webmaschine zu überwachen, wenn ein Bild in einer bestimmten Position der Schussfadenanschlagvorrichtung während des Webvorgangs aufgenommen wird. Die gleichartige Bewegung von Kameraeinrichtung und Schussfadenanschlagvorrichtung der Webmaschine kann insbesondere durch eine mechanische Kopplung zwischen der Kameraeinrichtung und der Schussfadenanschlagvorrichtung (Webblatt oder Weblade) erfolgen.

Während des Betriebs der Webmaschine wird die Schussfadenanschlagvorrichtung in der Regel zwischen zwei Positionen hin- und herbewegt, einer ersten Position (auch "Rückposition" genannt) und einer zweiten Position (auch "Anschlagposition" genannt), wobei die Schussfadenanschlagvorrichtung in die Anschlagposition gebracht wird, um einen in das geöffnete Webfach eingetragenen Schussfaden an die Schussfadenanschlaglinie zu befördern, und die Schussfadenanschlagvorrichtung anschliessend in die Rückposition zurück gebracht wird. Gesteuert von der Synchronisierungseinheit nimmt die Kameraeinrichtung vorzugsweise wie folgt Bilder innerhalb eines Schussfadenzyklus auf:
- Zumindest ein Bild, wenn die Schussfadenanschlagvorrichtung in Rückposition ist, wobei das Webfach in diesem Fall geöffnet ist und auf dem aufgenommenen Bild im Vordergrund die Kettfäden, welche der Kameraeinrichtung am nächsten sind (d.h. die oberen Kettfäden, wenn die Kameraeinrichtung oberhalb der Kettfäden angeordnet ist) und z.B. Webblattzähne erscheinen;
- zumindest ein Bild, wenn die Schussfadenanschlagvorrichtung im Bereich der Anschlagposition ist, wobei das aufgenommene Bild das bereits hergestellte Gewebe (mit dem zuletzt angeschlagenen Schussfaden und dem zuletzt eingetragenen Schussfaden) darstellt;
- ein oder mehrere zusätzliche Bilder, wenn die Schussfadenanschlagvorrichtung in eine oder mehrere Zwischenpositionen zwischen der Rückposition und der Anschlagposition bzw. zwischen der Anschlagposition und der Rückposition gebracht ist, wobei diese zusätzlichen Bilder in der Regel aufgenommen werden, wenn das Webfach total geöffnet ist (das Webfach kann möglicherweise nicht bzw. nicht total geöffnet sein, wenn die Schussfadenanschlagvorrichtung in der Rückposition ist), nachdem der Schussfaden normalerweise eingefügt ist oder eingefügt sein sollte und wenn sich das Webfach schliesst und dabei verändert; auf diesen zusätzlichen Bildern erscheinen in der Regel die Kettfäden des Webfachs, die nicht überwacht werden, wenn sich die Schussfadenanschlagvorrichtung in der Rückposition befindet, oder der eingefügte Schussfaden, zumal sich in diesen Zwischenpositionen der Schussfadenanschlagvorrichtung die Distanz zwischen der Kameraeinrichtung und den Kettfäden bzw. die Distanz zwischen der Kameraeinrichtung und dem Schussfaden derart verändert, dass sich bestimmte Fäden in einer geeigneten Position befinden können, um mit der Kameraeinrichtung überwacht zu-werden.

Die Kameraeinrichtung nimmt zumindest ein Bild in einer bestimmten Positionen der Schussfadenanschlagvorrichtung während des Webvorgangs auf.

Auch wenn es sich oftmals als ausreichend erweist, wenn eine Aufnahme von Bildern bzw. eine Erfassung von Bilddaten an zumindest zwei unterschiedlichen bestimmten Bewegungspositionen der Schussfadenanschlagvorrichtung während des Webvorgangs erfolgt (beispielsweise jeweils dann, wenn sich die Bewegungsposition der Schussfadenanschlagvorrichtung an oder in der Nähe einer der beiden Endpositionen der Bewegung befindet), so ist es möglich, wenn eine Datenaufnahme an mehreren bestimmten Positionen und besonders bevorzugt über längere Bereiche kontinuierlich, besonders bevorzugt im Wesentlichen über den gesamten Bewegungsbereich kontinuierlich, erfolgt. Auf diese Weise kann eine Fehlererkennung über einen sich entlang der Kettfadenrichtung erstreckenden Bereich erfolgen. Hierdurch kann das Auftreten von unentdeckten Fehlern nochmals verringert werden, was vorteilhaft ist.

Möglich ist es auch, dass das Verfahren derart durchgeführt wird, dass die zumindest im Wesentlichen gleichartige Bewegung der Kameraeinrichtung mit der Schussfadenanschlagvorrichtung durch eine mechanische Kopplung der Kameraeinrichtung und Schussfadenanschlagvorrichtung (Webblatt/Weblade) erfolgt, insbesondere dadurch, dass eine Schussfadenanschlagvorrichtung und/oder eine Webmaschine gemäss der vorherigen Beschreibung verwendet wird. Insbesondere in einem derartigen Fall können sich die bereits beschriebenen Vorteile und Eigenschaften in zumindest analoger Weise ergeben. Insbesondere ist auch eine zumindest analoge Weiterbildung im Sinne der vorherigen Beschreibung möglich.

Vorteilhaft ist es, wenn das Verfahren derart durchgeführt wird, dass zumindest im Bereich einer Anschlagposition der Schussfadenanschlagvorrichtung (z.B. an der Anschlagposition oder in der Nähe der Anschlagposition) eine Datenerfassung bzw. die Aufnahme eines Bildes erfolgt. Dabei kann es sich nicht nur um einen einzelnen "Punkt" bei der Bewegung der Schussfadenanschlagvorrichtung handeln. Insbesondere kann es auch vorteilhaft sein, wenn im Bereich der Anschlagposition in mehreren Positionen der Schussfadenanschlagvorrichtung jeweils eine Datenerfassung erfolgt. Im Bereich des Anschlagpunkts ist die Kameraeinrichtung dem Gewebe am nächsten, was vorteilhaft ist, um Fehler auf dem Gewebe bzw. im Gewebe zu detektieren. Da sich die Kameraeinrichtung mit der Schussfadenanschlagvorrichtung bewegt, kann die Schussfadenanschlagvorrichtung ausserhalb des Bildbereichs der Kameraeinrichtung bleiben und nichts auf den aufgenommenen Bildern verdecken, wenn die Schussfadenanschlagvorrichtung sich in der Nähe der Anschlagposition befindet

Möglich ist es auch, dass das Verfahren derart durchgeführt wird, dass eine Bildverarbeitung eines aufgenommenen Bilds durchgeführt wird, um einen Fehler für einen der überwachten Kettfäden zu detektieren, und den Fehler längs einer zumindest teilweise parallel zu einer Schussfadenanschlaglinie der Schussfadenanschlagvorrichtung verlaufenden Richtung zu lokalisieren.

Insbesondere dann, wenn zusätzlich die Position des Fehlers (insbesondere die räumliche Lage längs einer zumindest teilweise parallel zu einer Schussfadenanschlaglinie der Schussfadenanschlagvorrichtung verlaufenden Richtung; also längs der Schussfadenrichtung) erkannt wird, kann die Korrektur des Fehlers besonders schnell durch korrigierende Eingriffe seitens eines Maschinenbenutzers erfolgen.

Möglich ist es insbesondere, dass ein Teilbereich des Bildbereichs der Kameraeinrichtung mit einem Bereich des Gewebes und/oder mit einem zu überwachenden Kettfaden korreliert werden. Die Kameraeinrichtung nimmt jedes Bild in Form einer Mehrzahl nebeneinander angeordneter Bildpunkte auf und wird vor dem Webvorgang jedem zu überwachenden Kettfaden zumindest einer der Bildpunkte zugeordnet, der dem Teil des Raumbereichs bzw. des Bildbereichs entspricht, in welchem sich der zu überwachende Kettfaden während des Webvorgangs voraussichtlich befindet. Andersherum gesagt wird für den Webvorgang einmal (beispielsweise am Beginn des Webvorgangs) eine Zuordnung der Kettfäden durchgeführt, bei welcher jedem zu überwachenden Kettfaden zumindest einer der Bildpunkte zugeordnet wird. Die Zuordnung gilt für den ganzen Webvorgang, da er von dem Einzugsrapport abhängt.

Mit der Zuordnung kann eine Verarbeitung der gelieferten optischen Daten (Bilddaten) sehr schnell erreicht werden, weil zur Durchführung von Bildanalysen der aufgenommenen Bilder bzw. von Analyen der entsprechenden Bilddaten (wie erwähnt) keine räumliche Referenz mehr bestimmt werden muss. Insbesondere ist es auch möglich, dass hierdurch eine vergleichsweise einfache und/oder genaue Positionsermittlung eines eventuellen Fehlers gefördert wird (insbesondere mit Bezug auf eine Koordinatenachse, welche sich parallel zur Schussfadenanschlaglinie erstreckt, kann eine genaue Lokalisierung des Fehlers erfolgen).

Möglich ist es insbesondere, dass, wenn eine Bildverarbeitung eines aufgenommenen Bildes einen Webfehler detektiert, ein Gerät, bevorzugt eine Beleuchtungseinrichtung, angesteuert wird, um sichtbar die Position des fehlerhaften Kettfadens anzuzeigen, die mit der Bildverarbeitung lokalisiert wird. Das Gerät kann auf der Schussfadenanschlagvorrichtung angeordnet werden, um die Position des Webfehlers (mit Bezug auf eine sich parallel zur Schussfadenanschlaglinie erstreckende Koordinatenachse) anzuzeigen.

Möglich ist es insbesondere, dass eine "Segmentierung" vorgenommen wird, d.h. in jeder Bewegungsposition der Schussfadenanschlagvorrichtung, in der ein Bild aufgenommen wird, wird der Bildbereich der Kameraeinrichtung in zwei Segmente geteilt wird. Dann wird nur eines der Segmente des Bildbereichs der Kameraeinrichtung einer detaillierten Analyse unterzogen, und zwar nur dasjenige Segment, von dem zu erwarten ist, dass nur dieses Segment diejenigen Informationen enthalten kann, welche mittels der Bildverarbeitung ermittelt werden sollen. Diese Segmentierung ermöglicht demnach eine gezielte Reduktion der auszuwertenden Daten. In diesem Zusammenhang ist es vorteilhaft, die Segmentierung abhängig von der jeweiligen Bewegungsposition der Schussfadenanschlagvorrichtung, in der das Bild aufgenommen wird, zu verändern, d.h. für verschiedene Bewegungspositionen der Schussfadenanschlagvorrichtung werden jeweils verschiedene Segmente des Bildbereichs einer detaillierten Analyse unterzogen. Dies ist im Hinblick auf eine Optimierung einer Datenreduktionzweckmässig, zumal in verschiedenen Bewegungspositionen der Schussfadenanschlagvorrichtung von der Kameraeinrichtung jeweils Bilder von verschiedenen Objekten aufgenommen werden, welche sich erwartungsgemäss an verschiedenen Positionen relativ zur Kameraeinrichtung befinden. Durch diese Veränderung der Segmentierung in Abhängigkeit von der Bewegungsposition der Schussfadenanschlagvorrichtung kann demnach eine besonders effiziente Datenreduktion erreicht und somit eine besonders schnelle Bilddatenverarbeitung ermöglicht werden.

Möglich ist es insbesondere, dass das Verfahren zusätzlich zu einer Überwachung auf Kettfadenfehler auch eine Überwachung auf Schussfadenfehler und Gewebefehler ermöglicht. Bei diesen Fehlern handelt es sich um die üblicherweise auftretenden Webfehler, wie zum Beispiel einen falschen Typ (hinsichtlich Farbe, Dichte, u.ä.) eines Kettfadens, eine falsche Anordnung von Kettfäden, die Abwesenheit eines Kettfadens wegen Bruch, ein Einzugsproblem (nicht die richtige Farbe zum Beispiel für den Kettfaden) oder ein Spannungsproblem für einen Kettfaden, die Abwesenheit eines Schussfadens oder einen fehlerhaften Eintrag eines Schussfadens, einen falschen Typ (hinsichtlich Farbe, Dichte, u.ä.) eines Schussfadens, ein Problem mit der Fachbildung der Kettfäden (falscher Fachwinkel, falsches Bindungsbild, u.ä.), ein Defekt für einen Webblattzahn (Brüche, Verzerrung, u.ä.), eine Abweichung der Position der Anschlaglinie, eine unregelmässige oder falsche Schussfadendichte im Gewebe, Flug oder Flecken in und auf der Oberfläche des Gewebes. Werden diese Fehler erkannt, so kann mit hoher Sicherheit darauf geschlossen werden, dass zum jeweiligen Zeitpunkt ein einwandfreies Produkt erzeugt wird. Da die Fehlererkennung aufgrund der Charakteristik der vorgeschlagenen Schussfadenanschlagvorrichtung und des vorgeschlagenen Verfahrens in aller Regel besonders schnell erfolgt, ist es möglich, innerhalb eines Schusseintragszyklus ein Ergebnis zu bekommen und eine Aktion zu steuern, bevor der nächste Schussfaden eingetragen wird. Die genannten Webfehler (und gegebenenfalls auch zusätzliche Webfehler) können insbesondere durch an sich im Stand der Technik bekannte Vorrichtungen und Verfahren erkannt werden. Insbesondere eignen sich hierzu Bilderkennungsverfahren bzw. Bilderkennungseinrichtungen, die für Webmaschinen, aber auch in anderen Anwendungsgebieten der Technik bekannt sind und gegebenenfalls noch entwickelt werden.

Weitere Einzelheiten der Erfindung und insbesondere beispielhafte Ausführungsformen der vorgeschlagenen Vorrichtungen und des vorgeschlagenen Verfahrens werden im Folgenden anhand der beigefügten Zeichnungen erläutert. Es zeigen:
- Fig. 1: ein erstes Ausführungsbeispiel für eine Überwachungsvorrichtung mit integrierter Anordnung von Kameraeinrichtungen für eine Webmaschine in schematischer Querschnittsansicht;
- Fig. 2: die in Fig. 1 dargestellte Anordnung in einer Ausschnittsvergrösserung in schematischer Querschnittsansicht;
- Fig. 3: einen Ausschnitt der in Fig. 1 gezeigten Überwachungsvorrichtung in einer schematischen Draufsicht auf eine Webblattebene;
- Fig. 4: ein zweites denkbares Ausführungsbeispiel für eine Überwachungsvorrichtung mit integrierter Anordnung von Kameraeinrichtungen in einer schematischen Querschnittsansicht;
- Fig. 5: ein schematisches Flussdiagramm für ein Verfahren zur Überwachung einer Webmaschine.
- Fig. 6: eine schematische Darstellung einer Steuerung der Überwachungsvorrichtung und einer Webmaschine gemäss Fig. 1;
- Fig. 7A-7D: Beispiele für Bilder, welche mit einer Kameraeinrichtung gemäss Fig. 1 aufgenommen wurden, jeweils für verschiedene Positionen einer Schussfadenanschlagvorrichtung während verschiedener Phasen eines Schussfadeneintragszyklus.

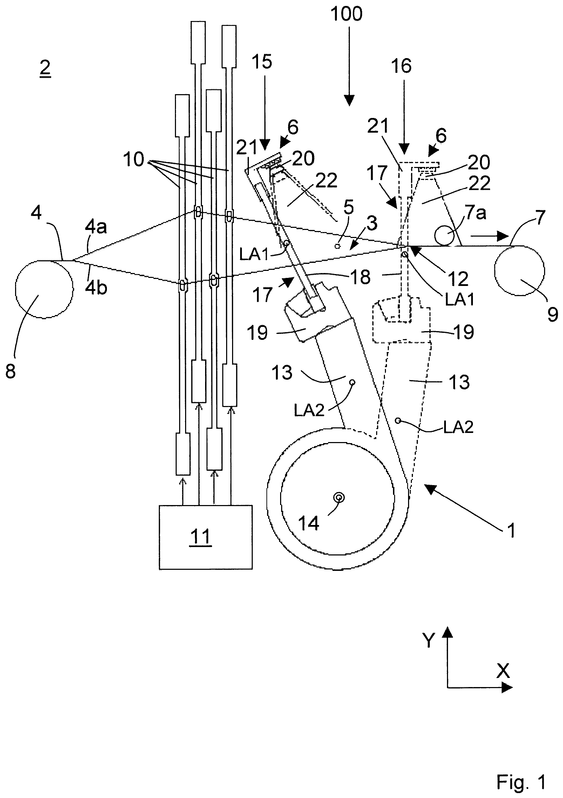

In Fig. 1 ist ein erstes Ausführungsbeispiel für eine Überwachungsvorrichtung 100 für eine Webmaschine 2 in Kombination mit einer Schussfadenanschlagvorrichtung 1 in einer schematischen Querschnittsdarstellung dargestellt. Die Webmaschine 2 ist nur schematisch angedeutet, wobei bei der Darstellung besonderer Wert auf den Bereich, in dem das Webfach 3 aus den Kettfäden 4 gebildet wird, gelegt ist. Gemäss dem vorliegenden Vorschlag ist die Schussfadenanschlagvorrichtung 1 darüber hinaus mit einer Kameraanordnung 6 zur optischen Inspektion der zu webenden Kettfäden 4 und Schussfäden 5 bzw. des bereits gewebten Gewebes 7 versehen, worauf im Folgenden noch näher eingegangen wird.

In diesem Zusammenhang wird mit Bezug auf ein in den Figuren 1-3 dargestelltes Koordinatensystem mit Koordinatenachsen X, Y und Z angenommen, dass sich die Richtung des Schussfadens 5 (Schussrichtung) entlang der Koordinatenachse Z erstreckt, während das Gewebe 7 in einer Ebene angeordnet ist, welche parallel zu einer von den Koordinatenachsen X und Z aufgespannten Ebene angeordnet ist.

Die Kameraanordnung 6 kann eine oder mehrere Kameraeinrichtungen 20 umfassen, welche dazu ausgebildet sind, Bilder aufzunehmen. Im vorliegenden Beispiel umfasst die Kameraanordnung mehrere Kameraeinrichtungen 20, deren Anordnung relativ zur Schussfadenanschlagvorrichtung 1 im Folgenden detaillierter charakterisiert wird. Es sei darauf hingewiesen, dass die Schussfadenanschlagvorrichtung 1 während eines Betriebs der Webmaschine 2 in die Webmaschine 2 eingesetzt ist und dabei als ein Bestandteil der Webmaschine 2 verwendet wird. Andererseits ist vorgesehen, dass die Schussfadenanschlagvorrichtung 1 oder zumindest ein oder mehrere Teile der Schussfadenanschlagvorrichtung 1 (z.B. ein Webblatt 17, welches im Folgenden noch erläutert wird) auch aus der Webmaschine 2 entfernt wird, um beispielsweise zur Vorbereitung eines Webprozesses an einem von der Webmaschine 2 entfernten Ort die Kettfäden 4 in verschiedene, in der Schussfadenanschlagvorrichtung 1 ausbildete Durchgänge für die Kettfäden 4 einziehen zu können.

Im vorliegenden Beispiel umfasst die Überwachungsvorrichtung 100 die Kameraanordnung 6 in Kombination mit der Schussfadenanschlagvorrichtung 1 und bildet eine Einheit, welche als Ganzes unabhängig von Webmaschine 2 verwendet und beispielsweise transportiert werden kann und - je nach Bedarf - in die Webmaschine 2 montiert oder aus der Webmaschine 2 entfernt werden kann.

Die Webmaschine 2 weist den grundsätzlich bekannten Aufbau von Webmaschinen auf:
Zwischen einem Kettbaum 8 und einem Warenbaum 9 ist eine Vielzahl an einzelnen Kettfäden 4 gespannt. Die einzelnen Kettfäden 4 unterteilen sich für jeden Schusseintragszyklus in zwei Gruppen 4a, 4b. Üblicherweise gehören die einzelnen Kettfäden 4 entlang der Querrichtung des Gewebes 7 (in der Fig. 1 entlang der Y Richtung) abwechselnd zur ersten Gruppe von Kettfäden 4a bzw. zweiten Gruppe von Kettfäden 4b. Jeder einzelne Kettfaden 4 ist jeweils durch eine Weblitze 10 derart geführt, dass durch eine entsprechende Ansteuerung der Weblitzen 10 mithilfe einer Fachbildungsvorrichtung 11 und gegebenenfalls Schäften (wenn die Webmaschine 2 keine Jacquard-Maschine ist) jeweils ein Webfach 3 gebildet wird.

Die Kettfäden 4 sind im vorliegenden Beispiel in der Regel derart angeordnet, dass sich jeder Kettfaden 4 - für den Fall, dass kein offenes Webfach gebildet ist - im Wesentlichen parallel zu der Koordinatenachse X erstrecken.

In der Regel erfolgt die Ansteuerung der Weblitzen 10 gemäss eines Bindungsrapports der Fäden derart, dass in einem ersten Schritt ein Webfach 3 derart gebildet wird, dass eine erste Gruppe von Kettfäden 4a oben liegt, während eine zweite Gruppe von Kettfäden 4b unten liegt; anschliessend wird ein Schussfaden 5 durch das offene Webfach 3 eingebracht (beispielsweise mittels Hindurchschiessen eines Schützen oder Einbringung mithilfe einer Greifervorrichtung oder mithilfe von Luft). Anschliessend wird der frisch eingetragene Schussfaden 5 durch die Schussfadenanschlagvorrichtung 1 längs einer sich quer zu den Kettfäden 4 erstreckenden Schussfadenanschlaglinie 12 gegen das bereits gewebte Gewebe 7 angeschlagen; hiernach werden die relative Positionen der Weblitzen 10 hinsichtlich verändert, sodass eine andere erste Gruppe von Kettfäden 4a nunmehr unten liegt, wohingegen eine andere zweite Gruppe von Kettfäden 4b oben liegt (nicht dargestellt); hiernach wird wieder ein Schussfaden 5 in das Webfach 3 eingebracht und durch die Schussfadenanschlagvorrichtung 1 angeschlagen und so weiter.

In Fig. 1 weist die Schussfadenanschlagvorrichtung 1 im Wesentlichen zwei Hauptbaugruppen auf: Dies ist einerseits die Weblade 13, welche verschwenkbar an der Webladendrehachse 14 gelagert ist. Weiterhin weist die Schussfadenanschlagvorrichtung 1 ein Webblatt 17 auf.

Das Webblatt 17 hat eine längliche Struktur, welche im vorliegenden Beispiel eine Längsachse LA1 aufweist, die sich im Wesentlichen parallel zur Schussfadenanschlaglinie 12 erstreckt (d.h. senkrecht zur Zeichenebene der Fig. 1). Im vorliegenden Beispiel hat auch die Weblade 13 eine längliche Struktur; diese weist eine Längsachse LA2, die sich ebenfalls im Wesentlichen parallel zur Schussfadenanschlaglinie 12 erstreckt.

Es sei darauf hingewiesen, dass eine "Schussfadenanschlagvorrichtung" in Sinne der vorliegenden Erfindung nicht notwendigerweise - wie die Schussfadenanschlagvorrichtung 1 gemäss Fig. 1 - sowohl ein Webblatt (wie das Webblatt 17) als auch eine Weblade (wie die Weblade 13) umfassen muss. Im Sinne der vorliegenden Erfindung werden als "Schussfadenanschlagvorrichtung" beispielsweise auch angesehen: ein Webblatt oder eine Weblade oder eine Weblade und ein Webblatt, wobei in diesem letzten Fall das Webblatt an der Weblade befestigt ist. Eine "Schussfadenanschlagvorrichtung" in Sinne der vorliegenden Erfindung kann zumindest in der Regel als längliche Struktur mit einer Längsachse ausgebildet sein, welche sich (wie die Längsachsen LA1 und LA2) im Wesentlichen parallel zur Schussfadenanschlaglinie 12 erstreckt.

In jedem Schusseintragszyklus wird die Weblade 13 mittels eines (vorliegend nicht dargestellten) Aktuators zwischen einer ersten Position 15 (in Fig. 1 die linke Position der Schussfadenanschlagvorrichtung; mit durchgehenden Linien gezeichnet) und einer zweiten Position 16 (in Fig. 1 rechts dargestellt; mit gestrichelten Linien gezeichnet) und zurück in die erste Position 15 bewegt. Befindet sich die Schussfadenanschlagvorrichtung 1 in der ersten Position 15 (in diesem Zusammenhang auch "Rückposition" genannt), kann ein Schussfaden 5 auf einfache Weise in das offene Webfach 3 eingebracht werden. In der zweiten Position 16 (in diesem Zusammenhang auch "Anschlagposition" genannt) befindet sich demgegenüber das Webblatt 17 "auf Anschlag" mit der Schussfadenanschlaglinie 12. Der eingebrachte Schussfaden 5 wird somit an das bereits gebildete Gewebe 7 angeschlagen.

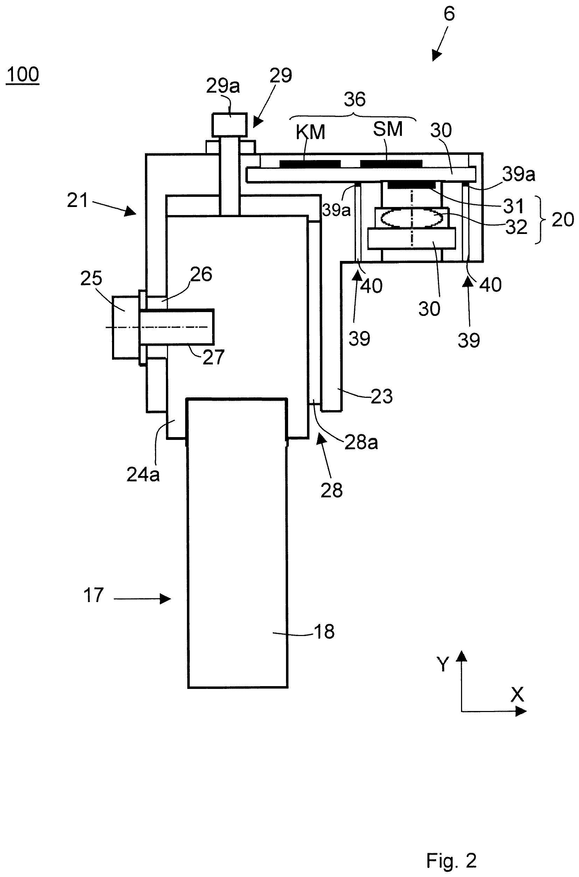

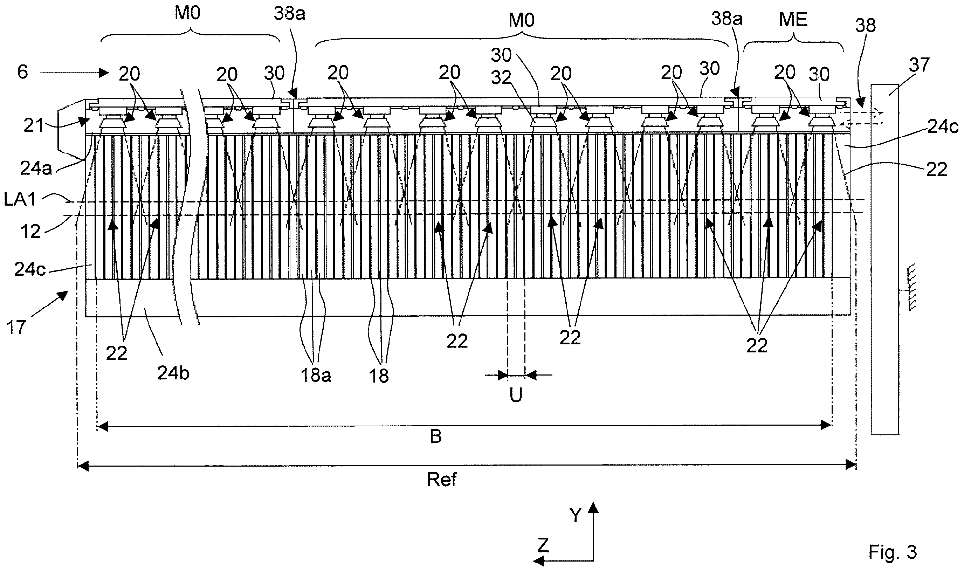

Wie in Fig. 1-3 angedeutet, ist das Webblatt 17 kammartig aufgebaut und weist eine Vielzahl von so genannten Rietzähnen 18 auf, die sich zwischen einem ersten (oberen) Bund 24a des Webblatts 17 und einem zweiten (unteren) Bund 24b des Webblatts 17 erstrecken, wobei Enden der Rietzähne 18 jeweils am Bund 24a bzw. am Bund 24b mit Klebmittel befestigt sind (nur auf Fig. 2 und 3 dargestellt). Dabei sind der erste Bund 24a und der zweite Bund 24b mittels zweier Endrietzähne 24c, welche jeweils ein Ende des ersten Bundes 24a mit einem Ende des zweiten Bundes 24b verbinden, derart zusammengehalten, dass der erste Bund 24a, der zweite Bunde 24b und die Endrietzähne 24c gemeinsam einen stabilen Rahmen bilden.

Wie aus Fig. 3 ersichtlich, sind die Rietzähne 18 in der Richtung der Längsachse LA1 des Webblatts 17 in einer Reihe hintereinander derart angeordnet, dass sich die Rietzähne 18 jeweils parallel zueinander erstrecken (in Richtung der in Fig. 3 dargestellten Koordinatenachse Y) und zwischen jeweils zwei benachbarten Rietzähnen 18 jeweils ein Durchgang 18a für Kettfäden 4 ausgebildet ist, wobei jeder der Durchgänge 18a sich zwischen dem ersten Bund 24a und dem zweiten Bund 24b erstreckt und jeweils für mindestens einen Kettfaden 4 durchgängig ist (insbesondere in einer Richtung senkrecht zur Fig. 3 dargestellten Zeichenebene). Die Kettfäden 4, werden regelmässig quer zur Richtung der Längsachse LA1 durch die Durchgänge 18a zwischen den einzelnen Rietzähnen 18 gemäss einem Einzugsrapport hindurchgeführt (der Aufbau des Webblatts 17 ist insbesondere in Fig. 3 gut zu sehen).

Das Webblatt 17 ist über eine geeignete Halterung 19 mit der Weblade 13 verbunden (die Halterung 19 ist als Teil der Weblade 13 ausgeführt).

Die Kameraanordnung 6 weist im vorliegenden Beispiel mehrere Kameraeinrichtungen 20 auf, welche in einer Reihe hintereinander angeordnet sind (entlang einer Richtung, welche in Fig. 1 senkrecht zur Zeichenebene verläuft, sodass in der Ansicht gemäss Fig. 1 eine im Vordergrund dargestellte Kameraeinrichtung 20 jeweils alle hinter dieser angeordneten Kameraeinrichtungen 20 verdeckt und in Fig. 1 nur eine der Kameraeinrichtungen 20 erkennbar ist). Die Kameraanordnung 6 ist (bzw. die jeweils zur Kameraanordnung 6 gehörenden Kameraeinrichtungen 20 sind) über einen Träger 21 mit dem Webblatt 17 verbunden und insbesondere am Webblatt 17 befestigt. Im dargestellten Ausführungsbeispiel ist der Träger 21 Teil der Kameraanordnung 6 und ist mobil mit dem Webblatt 17 und der Weblade 13 während des Webvorgangs.

Wie Fig. 1 andeutet, sind die Kameraeinrichtungen 20 an einer Seite des Webblatts 17 angeordnet, im vorliegenden Beispiel an derjenigen Seite des Webblatts 17, welche der Schussfadenanschlaglinie 12 zugewandt ist bzw. auf welcher der "Anschlagpunkt" des Webblatts 17 liegt (d.h. derjenige Bereich des Webblatts 17, welcher auf die Schussfadenanschlaglinie 12 trifft, wenn die Schussfadenanschlagvorrichtung 1 die Anschlagposition 16 erreicht). Das bedeutet für den Fall, dass das Webblatts 17 als ein Luftwebblatt (zur Verwendung in einer Luftwebmaschine) ausgebildet ist, dass die Kameraeinrichtungen 20 auf der Seite des Webblatts 17 angeordnet sind, auf welcher die Rietzähne des Webblatts 17 vorzugsweise mit bestimmten Ausformungen ausgestattet sein können (zur Ausbildung eines Luftkanals für einen Transport von Schussfäden 5 in einer zur Schussfadenanschlaglinie 12 parallelen Richtung mittels eines Luftstroms, nicht dargestellt).

Jede Kameraeinrichtung 20 ist ausgebildet, ein Bild von beliebigen Objekten aufzunehmen, welche sich in dem sogenannten Bildbereich der Kameraeinrichtung 20 befinden (d.h. in demjenigen Raumbereich, welcher auf einem mittels der Kameraeinrichtung 20 aufgenommenen Bild darstellbar ist). Jede Kameraeinrichtung 20 ist dazu ausgebildet, ein Bild in einer digitalen Darstellung aufzunehmen, welche mehrere Bildpunkte (Pixel) umfasst, die entweder eindimensional (z.B. linear hintereinander in einer Zeile oder Spalte) oder zweidimensional (linear hintereinander in zwei Dimensionen, d.h. in mehreren Zeilen und Spalten) angeordnet sein können. Dabei sind jedem Pixel in der Regel ein oder mehrere beim Aufnehmen eines Bildes erfasste Parameter zugeordnet, welche eine dem jeweiligen Bildpunkt zugeordnete Bildinformation (z.B. eine Information über eine Helligkeit bzw. eine Lichtintensität oder eine Farbinformation) enthalten. Die Gesamtheit dieser beim Aufnehmen eines Bildes erfassten, den jeweiligen Bildpunkten zugeordneten Parameter bilden Bilddaten, welche zur Analyse eines aufgenommenen Bildes herangezogen werden können.

Im vorliegenden Beispiel ist angenommen, dass jede Kameraeinrichtung 20 geeignet ist, Bilder aufzunehmen, welche in einer zweidimensionalen Anordnung von Pixeln mit mehreren Zeilen und Spalten dargestellt werden. Eine Mehrzahl von Pixeln kann jeweils in einer Reihe hintereinander in der Längsrichtung des Webblatts 17 angeordnet sein.

In Fig. 1 und 3 sind die Bildbereiche 22 der jeweils dargestellten Kameraeinrichtungen 20 schematisch dargestellt (jeder Bildbereiche 22 hat im vorliegenden Beispiel näherungsweise die Form eines Kegels und ist in Fig. 1 und 3 mit mehreren Linien dargestellt, welche eine Projektion des entsprechenden Kegels auf die Zeichenebene der Fig. 1 bzw. 3 darstellen). Wie Fig. 1 und 3 andeuten, sind die Bildbereiche 22 der Kameraeinrichtungen 20 derart angeordnet, dass ein mit einer der Kameraeinrichtungen 20 aufgenommenes Bild in der Regel einen Teil von mehreren Fäden darstellen kann, beispielsweise Abschnitte von mehreren Kettfäden 4 oder Abschnitte von mehreren Kettfäden 4 zusammen mit einem Abschnitt eines Schussfadens 5 oder einen Abschnitt eines Gewebes 7 aus mehreren Kettfäden 4 und Schussfäden 5.

Wie in Fig. 1 dargestellt, befindet sich zumindest ein Teil der Mehrzahl von Rietzähnen 18 zumindest teilweise im Bildbereich 22 einer der Kameraeinrichtungen 20. Vorzugsweise befindet sich jeder Rietzahn 18 des Webblatts 17 in mindestens einem Bildbereich 22 einer der Kameraeirichtungen 20 der Kameraanordnung 6. Wie Fig. 1 andeutet, erstreckt sich der Bildbereich 22 einer Kameraeinrichtung 20 (in einer Projektion auf die Bildebene der Fig. 1) jeweils entlang der Rietzähne 18 von der Kameraeinrichtung 20 bis zu den Kettfäden 4 bzw. zum Schussfaden 5 oder zum Gewebe 7. Wie man Fig. 1 gut entnehmen kann, bewegt sich die Kameraanordnung 6 wegen der mechanischen Verbindung zwischen der Kameraanordnung 6 und dem Webblatt 17 gemeinsam mit der Weblade 13 und mit dem Webblatt 17 (diese bilden als gemeinsame Einheit die Schussfadenanschlagvorrichtung 1 aus). Aus diesem Grund bewegt sich auch der jeweilige Bildbereich 22, sodass ein grösserer Bereich der Webfachbildungszone sowie ein gewisser Teilbereich des bereits fertiggestellten Gewebes 7 von der Kameraanordnung 6 in Kettfadenrichtung überstrichen werden kann und Bilder der vorstehend genannten Bereiche der Webfachbildungszone und des Gewebes mit den Kameraeinrichtungen 20 der Kameraanordnung 6 aufgenommen werden können. Es ist zwar nicht möglich, dass der gesamte überstrichene Bereich zu einem beliebigen Zeitpunkt gleichzeitig von der Kameraanordnung 6 aufgenommen wird. Nach einer Bewegung zwischen erster Position 15 (Rückposition) und zweiter Position 16 (Anschlagposition) bzw. zweiter Position 16 und erster Position 15 ist jedoch der gesamte Bereich der Webmaschine 2 überstrichen, welcher einer optischen Inspektion mittels der Kameraanordnung 6 zugänglich ist und dementsprechend mit der Kameraanordnung 6 überwacht werden kann ("Überwachungsbereich") (also jeweils nach einer "halben Bewegungsperiode der Weblade"). Wird die "Aufnahmezeit" mit der Position der Weblade 13 (beispielsweise über einen zusätzlichen Positionssensor oder über die Ansteuerung des Aktuators, der die Weblade 13 bewegt, ermittelbar) korreliert, so ist es möglich, jedem aufgenommenen Bild auch eine Ortsinformation mit Bezug auf eine sich parallel zur Kettfadenrichtung erstreckende Koordinatenachse zuzuordnen, sodass immer mit grosser Präzision ermittelbar ist, welche Längsabschnitte der Kettfäden 4 auf dem jeweiligen Bild dargestellt sind.

Wie insbesondere Fig. 1 andeutet, ist die Kameraanordnung 6 derart am Webblatt 17 montiert, dass auf allen mit den Kameraeinrichtungen 20 aufgenommenen Bildern zumindest ein Teil der Rietzähne 18 erscheint (unabhängig von der momentanen Position der Schussfadenanschlageinrichtung 1). Befindet sich hingegen die Schussfadenanschlageinrichtung 1 an der Anschlagposition 16 oder zumindest in der Nähe der Anschlagposition 16 (beispielsweise in den letzten 20% der Bewegung der Weblade 13 von der Rückposition zur Anschlagposition und/oder in den ersten 20% der Bewegung der Weblade 13 von der Anschlagposition zur Rückposition), so erscheint auf den aufgenommenen Bildern jeweils ein sich entlang der Anschlaglinie 12 erstreckender Abschnitt des Gewebes 7, wobei insbesondere ein durch die Anschlaglinie 12 begrenzter Rand dieses Gewebeabschnitts auf diesen Bildern erscheint.

Mit Bezug auf Fig. 1 sei weiterhin darauf hingewiesen, dass die Webmaschine 2 zumindest zwei Breithalterelemente 7a aufweist, welche in der Nähe der Schussfadenanschlaglinie 12 an jeweils (bezogen auf die Längsrichtung eines Schussfadens 5) gegenüberliegenden Rändern des Gewebes 7 angeordnet sind und die Funktion haben, an diesen gegenüberliegenden Rändern des Gewebes 7 auf das Gewebe 7 derart einzuwirken, dass die Breite des Gewebes - bezogen auf die Längsrichtung des Schussfadens 5 - innerhalb bestimmter Toleranzen einen vorgegebenen Wert hat (in Fig. 1 ist lediglich einer dieser Breithalterelemente 7a dargestellt, wobei das andere Breithalterelement in der Ansicht gemäss Fig. 1 nicht sichtbar ist). Wie Fig. 1 andeutet, liegt das eine dargestellte Breithalterelement 7a zumindest dann in einem Bildbereich 22 eines der Kameraeinrichtungen 20 der Kameraanordnung 6, wenn sich die Schussfadenanschlageinrichtung 1 an der zweiten Position 16 (Anschlagposition) oder zumindest in der Nähe der Anschlagposition 16 befindet. Somit können zumindest mit einer der Kameraeinrichtungen 20 Bilder eines der Breithalterelemente 7a und eines Abschnitts des Gewebes 7 in einer Umgebung dieses Breithalterelements 7a aufgenommen werden, sodass auf diese Weise auch eine Überwachung der Funktion der Breithalterelemente 7a möglich ist.

In Fig. 2 ist ein Teil der Überwachungsvorrichtung 100 in einer vergrösserten Darstellung im schematischen Querschnitt detaillierter dargestellt, sodass auch Einzelheiten der Kameraanordnung 6 und insbesondere Einzelheiten einer einzelnen Kameraeinrichtung 20 deutlicher erkennbar sind.

Der Träger 21 der Kameraanordnung 6 ist als im Wesentlichen U-förmiges Profil 23 ausgebildet, welches den ersten (oberen) Bund 24a des Webblatts 17 umgreift. Zur kraftschlüssigen Verbindung dienen regelmässig angeordnete Verbindungsschrauben 25, die jeweils eine Durchgangsbohrung 26 in einem Bereich des Profils 23 des Trägers 21 durchgreifen und in ein mit einem Gewinde versehenes Sackloch 27 im ersten (oberen) Bund 24a des Webblatts 17 eingreifen. Auf der der Verbindungsschraube 25 gegenüberliegenden Seite des ersten Bundes 24a ist darüber hinaus zwischen dem ersten Bund 24a und dem betreffenden Bereich des Profils 23 des Trägers 21 bzw. der Kameraeinrichtung 20 eine Erschütterungsdämpfungseinrichtung 28 ausgebildet. Im vorliegenden Beispiel umfasst die Erschütterungsdämpfungseinrichtung 28 ein Gummiblatt 28a, welches zwischen dem ersten Bund 24a des Webblatts 17 und dem Profil 23 eingespannt ist und der Schock- und Schwingungsabsorption dient. Bei der Bewegung der Schussfadenanschlagvorrichtung 1 kommt es jeweils zu Schwingungen und bei Erreichen einer der beiden Endpositionen 15, 16 (insbesondere der zweiten Position 16, bei der das Webblatt 17 gegen die Schussfadenanschlaglinie 12 schlägt) zu einer gewissen Erschütterung. Das Gummiblatt 28a dämpft diese Schwingungen und diese Erschütterungen, was zu einer signifikanten Erhöhung der Standzeit der Kameraanordnung 6 bzw. der Kameraeinrichtungen 20 führt. Die mechanische Verbindung zwischen dem Träger 21 und dem Webblatt 17 ist lösbar, sodass der mit den Kameraeinrichtungen 20 ausgestattete Träger 21 auf einem anderen Webblatt befestigt werden kann.

Weiterhin ist aus Fig. 2 ersichtlich, dass die Überwachungsvorrichtung 100 eine Einrichtung 29 zur Justierung der Position mindestens einer Kameraeinrichtung 20 relativ zur Schussfadenanschlagvorrichtung 1 (im Folgenden "Justier-Einrichtung" genannt) umfasst. Im vorliegenden Fall umfasst die Justier-Einrichtung 29 mehrere regelmässig angeordnete Justierschrauben 29a, welche in Fig. 2 in einem oberen Bereich des Profils 23 des Trägers 21 zu erkennen sind. Jede Justierschraube 29a erstreckt sich parallel zu der Längsrichtung der Rietzähne 18 (d.h. in Richtung der in Fig. 2 dargestellten Koordinatenachse Y). Das Ende jeder Justierschraube 29a stützt sich dabei am ersten Bund 24a des Webblatts 17 ab. Nach Lösen der Verbindungsschrauben 25 können die Justierschrauben 29a weiter hinein- bzw. herausgedreht werden (im Träger 21 ist ein zur Justierschraube 29a korrespondierendes Gewinde ausgebildet), sodass die Kameraeinrichtungen 20 nach oben und nach unten bewegt werden können (bezüglich der in Fig. 2 gezeigten Lage jeweils parallel zur Längsrichtung der Rietzähne 18 bzw. in Richtung der in Fig. 2 dargestellten Koordinatenachse Y), sodass die Lage jeder Kameraeinrichtung 20 präzise relativ zu den Kett- bzw. Schussfäden 4 bzw. 5 und dem Gewebe 7 einjustiert werden kann.

Wie Fig. 2 andeutet, umfasst jede Kameraeinrichtung 20 einen Bildsensor 31 mit einer Anordnung von lichtempfindlichen Sensorelementen, welche der elektronischen Erfassung eines mit der Kameraeinrichtung 20 aufzunehmenden Bildes bzw. einer digitaler Darstellung eines mit der Kameraeinrichtung 20 aufzunehmenden Bildes mit einer Mehrzahl nebeneinander angeordneter Bildpunkte (Pixel) dient. Der Bildsensor 31 kann beispielsweise als CCD- oder CMOS-Sensor oder gegebenenfalls auf Basis anderer lichtempfindlicher Sensorelemente realisiert sein.

Wie aus Fig. 2 ersichtlich, ist jede Kameraeinrichtung 20 mit einer optischen Linse 32 ausgestattet, welche dazu dient, ein optisches Bild eines mittels der Kameraeinrichtung 20 zu überwachenden Objekts (in diesem Fall ein optisches Bild der Kett- bzw. Schussfäden 4 bzw. 5 und des Gewebes 7) zu erzeugen und - möglichst scharf fokussiert - auf den Bildsensor 31 abzubilden. Im vorliegenden Fall kann die Fokussierung dadurch beeinflusst werden, dass mittels der Justier-Einrichtung 29 die Lage jeder Kameraeinrichtung 20 präzise relativ zu den Kett- bzw. Schussfäden 4 bzw. 5 und dem Gewebe 7 einjustiert werden kann (wie erwähnt). Alternativ wäre es natürlich auch denkbar, jede Kameraeinrichtung 20 mit einer geeigneten Einrichtung zu versehen, welche es ermöglicht, einen Abstand zwischen der Linse 32 und dem Bildsensor 31 zu variieren.

Im vorliegenden Fall ist es beispielsweise zweckmässig, die Fokussierung der Linse 32 derart einzustellen, dass die Linse 32 ein (optimal) scharfes Bild des Gewebes 7 auf dem Bildsensor 31 erzeugt, wenn sich die Schussfadenanschlagvorrichtung 1 in der Nähe der zweiten Position 16 (Anschlagposition) befindet.

Wie aus Fig. 2 weiterhin ersichtlich, kann jede Kameraeinrichtung 20 zum Schutz des Bildsensors 31 und der Linse 32 mit einem Schutzglas 33 versehen sein, um insbesondere Ablagerungen von Staub auf dem Bildsensor 31 und der Linse 32 zu verhindern. Um derartige Staubablagerungen besonders effizient zu verhindern, sind weitere Massnahmen denkbar, beispielsweise eine permanenter Ionisierung der Umgebungsluft (zum Verhindern elektro-statischer Aufladung bestimmter Werkstoffe, z.B. von Glas) oder eine Einrichtung einer permanenten Luftspülung.

Wie aus Fig. 3 ersichtlich, umfasst die Kameraanordnung 6 der Überwachungsvorrichtung 100 eine Mehrzahl der Kameraeinrichtung 20, wobei die jeweiligen Kameraeinrichtungen 20 linear in einer Reihe hintereinander entlang der Richtung der Längsachse LA1 des Webblatts 17 und im Wesentlichen parallel zur Schussfadenanschlaglinie 12 angeordnet sind.

Die Überwachungsvorrichtung 100 gemäss Fig. 1-3 ist vorzugsweise modular aufgebaut und umfasst im vorliegenden Fall mehrere Module. Jedes der Module umfasst - als ein Träger für alle im jeweiligen Modul enthaltenen Komponenten - eine Platine 30. Wie aus Fig. 3 ersichtlich, sind alle Platinen 30 der Überwachungsvorrichtung 100 jeweils hintereinander entlang der Richtung der Längsachse LA1 des Webblatts 17 angeordnet und am Träger 21 befestigt.

Jedes der Module umfasst in der Regel (wie aus Fig. 2, 3 und 6 ersichtlich):
- mehrere Kameraeinrichtungen 20 zum Aufnehmen von Bildern,
- mindestens eine Beleuchtungsvorrichtung 39 zur Beleuchtung der Bildbereiche 22 der jeweiligen Kameraeinrichtungen 20 des Moduls und
- eine Datenerfassungs- und Auswerteeinheit 36.

Dabei kann die Datenerfassungs- und Auswerteeinheit 36 jeweils mehrere funktionelle Elemente umfassen, z.B.
- eine Kontroll- und Recheneinheit KM, und/oder
- einen schnellen lokalen Speicher SM, z.B. einen RAM-Speicher (Random Access Memory), welcher mit der Kontroll- und Recheneinheit KM in Verbindung steht, und/oder
- eine Synchronisierungseinheit SE.

Die Kontroll- und Recheneinheit KM des jeweiligen Moduls kann beispielsweise als FPGA-Schaltung ("Field Programmable Gate Array") ausgebildet sein und steht insbesondere mit den Kameraeinrichtungen 20 des jeweiligen Moduls in Verbindung, um beispielsweise die Kameraeinrichtungen 20 des jeweiligen Moduls anzusteuern, beispielsweise um die Kameraeinrichtungen 20 zum Aufnehmen eines Bildes zu veranlassen, oder um eine Verarbeitung der von den Kameraeinrichtungen 20 des Moduls aufgenommen Bilder vorzunehmen.

Der Speicher SM des jeweiligen Moduls dient zum Speichern von dynamische Daten, z.B. für unverarbeitete Bilddaten (Rohdaten), welche ein von einer Kameraeinrichtung 20 aufgenommenes Bild oder Teile eines derartigen Bildes repräsentieren, und/oder für verarbeitete Bilddaten wie z.B. Ergebnisse oder Zwischenergebnisse von Berechnungen, welche von der Kontroll- und Recheneinheit KM vorgenommen werden, beispielsweise für eine Verarbeitung von aufgenommenen Bildern.

Die Synchronisierungseinheit SE des jeweiligen Moduls ist dazu ausgebildet, jede Kameraeinrichtung 20 des jeweiligen Moduls mit einer Bewegungsposition der Schussfadenanschlagvorrichtung 1 zu synchronisieren, um jede Kameraeinrichtung 20 in Abhängigkeit von einer Bewegungsposition der Schussfadenanschlagvorrichtung 1 zu steuern. Dafür braucht die Synchronisierungseinheit SE Informationen über die momentane Position der Schussfadenanschlagvorrichtung 1 und, für jede Kameraeinrichtung 20 des jeweiligen Moduls, Informationen über die gewünschten Positionen der Schussfadenanschlagvorrichtung 1, an denen in den jeweiligen Schussfadeneintragszyklen jeweils Bilder aufgenommen werden sollen.

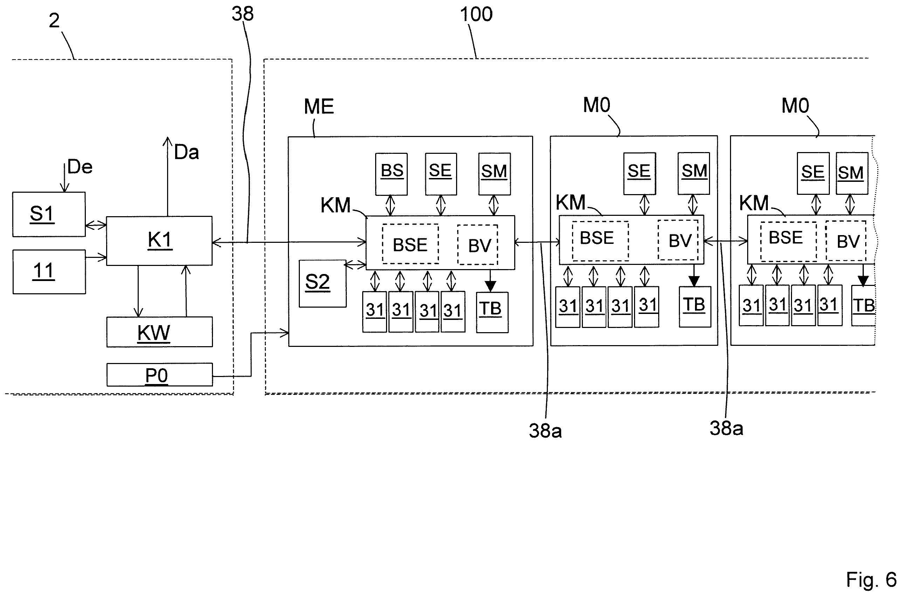

Wie aus Fig. 3 ersichtlich, sind die Module der Überwachungsvorrichtung 100 derart konzipiert, dass sie unterschiedlich sein können. Die Überwachungsvorrichtung 100 kann beispielsweise mehrere gleich ausgebildete Module M0 (sogenannte "Grund-Module" M0) aufweisen, welche beispielsweise 8 Kameraeinrichtungen 20 aufweisen können und hinsichtlich ihrer Funktionalität identisch sind. Die Überwachungsvorrichtung 100 kann zusätzlich ein Modul ME (sogenanntes "End-Modul") aufweisen, welches gegenüber den Modulen M0 eine "erweiterte Funktionalität" aufweist und an einem Ende des Webblatts 17 angeordnet ist. Wie aus Fig. 3 ersichtlich, sind alle Module MO und das Modul ME über (Daten-) Verbindungen 38a miteinander verbunden, um einen Kommunikation von Daten zu ermöglichen. Im vorliegenden Beispiel sind jeweils zwei benachbarte Module M0 über eine Verbindung 38a (z.B. über elektrische Kabelverbindungen oder Lichtleiter) miteinander in Reihe geschaltet, sodass alle Module M0 über die Verbindung 38a in Reihe geschaltet sind. Weiterhin ist eines der Module M0 mit dem Modul ME verbunden, sodass alle Module M0 über die Verbindungen 38a mit dem Modul ME kommunizieren können. Das Modul ME ist im vorliegenden Beispiel - im Gegensatz zu den Modulen M0 - mit einer Datenübertragungseinrichtung ausgestattet, welche mittels einer drahtlosen Datenübertragung 38, z.B. nach einem "Near Field Communicati-on"-Standard (NFC), mit einem Steuergerät 37 der Webmaschine 2 kommunizieren kann. Wegen der Verbindungen 38a zwischen den Modulen M0 und ME und der drahtlosen Datenübertragung 38 zwischen dem Modul ME und dem Steuergerät 37 der Webmaschine 2 können demnach alle Module M0 unter Kontrolle des Moduls ME mit dem Steuergerät 37 der Webmaschine 2 kommunizieren Und gegebenenfalls Daten austauschen. Weiterhin kann die Kontroll- und Recheneinheit KM des Moduls ME die Funktion einer "Haupt-Recheneinheit" (Master-Recheneinheit) übernehmen und in dieser Funktion Daten oder Steuersignale an die Module M0 senden, um die Module M0 zu steuern. Weitere Beispiele für die "erweiterte Funktionalität" des Moduls ME werden im Folgenden noch im Zusammenhang mit Fig. 6 erläutert.

Wie man insbesondere Fig. 3 entnehmen kann, sind die einzelnen Kameraeinrichtungen 20 derart auf der Platine 30 (bzw. den Platinen 30) zueinander beabstandet angeordnet, dass die jeweiligen Bildbereiche 22 zweier benachbarter Kameraeinrichtungen 20 bereichsweise in der Richtung der Längsachse LA1 des Webblatts 17 überlappen. Zur Veranschaulichung dieses Sachverhalts ist in Fig. 3 für zwei benachbarte Kameraeinrichtungen 20 ein sich in der Richtung der Längsachse LA1 erstreckender Überlappungsbereich U angegeben, welcher das Ausmass der Überlappung der Bildbereiche 22 dieser zwei benachbarten Kameraeinrichtungen 20 charakterisiert (die Erstreckung des Überlappungsbereichs U entlang der Längsachse LA1 ist in Fig. 3 durch einen Doppelpfeil angegeben). Wenn die Platinen 30 auf dem Webblatt 17 angeordnet sind, werden somit gewisse Bereiche der Kettfäden 4 bzw. des Gewebes 7, die sich im vorstehend genannten Überlappungsbereich U der Bildbereiche 22 zweier benachbarten Kameraeinrichtungen 20 befinden, auf Bildern dieser zwei Kameraeinrichtungen 20 erscheinen und können deshalb von diesen zwei Kameraeinrichtungen 20 "gleichzeitig" überwacht werden. Auf diese Weise können "blinde Flecken" vorteilhaft vermieden werden, sodass eine besonders hohe Inspektionsgüte der Webmaschine 2 resultieren kann. Diese Überlappung wird mit einer schon erwähnten Kalibrierung verwaltet.

Wie aus Fig. 3 ersichtlich, sind die Kameraeinrichtungen 20 der Kameraanordnung 6 derart hintereinander angeordnet, dass sich die Gesamtheit aller Bildbereiche 22 der Kameraeinrichtungen 20 in einer Richtung parallel zur Schussfadenanschlaglinie 12 über eine Distanz Ref erstrecken, welche grösser oder gleich der Länge des Längsabschnitts des Webblatts 17 ist, in welchem die Durchgänge 18a für die Kettfäden 4 ausgebildet sind. Der vorstehend genannte Längsabschnitt des Webblatts 17 hat offenbar eine Länge B (in Fig. 3 durch einen entsprechenden Doppelpfeil B gekennzeichnet), welche der maximalen Breite der Webkette entspricht, welche mittels des Webblatts 17 geführt wird. Dementsprechend ist es möglich, mit allen Kameraeinrichtungen 20 der Kameraanordnung 6 die ganze Breite des Gewebes 7, welches mittels des Webblatts 17 herstellbar ist, und die Gesamtheit aller Kettfäden 4, welche durch die Durchgänge 18a durchführbar sind, zu überwachen.

Es ist möglich, dass die Bildverarbeitung der aufgenommenen Bilder im Wesentlichen vollständig durch die Datenerfassungs- und Auswerteeinheiten 36, die gemeinsam mit der Kameraanordnung 6 auf dem Webblatt 17 ausgebildet sind, erfolgt. Ebenso ist es jedoch auch möglich, dass hier lediglich eine Vorauswertung erfolgt, beispielsweise eine vorherige Aufarbeitung, um nur bestimmte Webfehler zu detektieren, eine Nutzung von Datenkompressionsalgorithmen und dergleichen.

Wie bereits erwähnt, umfasst jedes Modul M0 bzw. ME mindestens eine Beleuchtungsvorrichtung 39 zur Beleuchtung der Bildbereiche 22 der jeweiligen Kameraeinrichtungen 20 des Moduls M0 bzw. ME. Wie in Fig. 2 angedeutet ist, umfasst die Beleuchtungsvorrichtung 39 jedes Moduls M0 bzw. ME Leuchtdioden 39a (LEDs), die in zwei Reihen jeweils linienförmig in Richtung der Längsachse LA1 jeweils hintereinander an jeder Platine 30 derart angeordnet sind, dass die Bildbereiche 22 der an der Platine 30 angeordneten Kameraeinrichtungen 20 beleuchtet werden. Bei den Leuchtdioden 39a kann es sich vorteilhafter Weise um verschiedenartige Leuchtdioden 39a handeln, beispielsweise um rote, grüne, blaue und infrarote Leuchtdioden 39a. Auf diese Weise kann eine extrem grosse Breite an potentiellen Webfehlern erkannt werden. Die Leuchtdioden 39a können dabei gleichzeitig mit Strom beaufschlagt werden (zum Beispiel Weisslicht bis hinein ins Infrarote), aber auch sukzessive nacheinander angesteuert werden, sodass zu bestimmten Zeitpunkten unterschiedliche Lichtfarben auf die Kettfäden 4 oder Schussfäden 5 bzw. das Gewebe 7 abgestrahlt werden. Das von den Leuchtdioden 39a erzeugte Licht wird vorliegend über Glasfaserleiter 40 von den Leuchtdioden 39a zur Gehäusekante der Kameraeinrichtung 20 geführt. Hierdurch kann eine für die jeweiligen Zwecke geeignete Fokussierung und Abstrahlrichtung realisiert werden.

Insbesondere ist es auch möglich, die Leuchtdioden 39a derart selektiv anzusteuern, dass diese einen gewissen Bereich des Gewebes 7 oder der Kettfäden 4 beleuchten. Ein derartiges Ansteuern kann dann erfolgen, wenn die Datenerfassungs- und Auswerteeinheit 36 und/oder das Steuergerät 37 einen schwerwiegenden Fehler ermittelt haben, der einen Abbruch des Webvorgangs der Webmaschine 2 rechtfertigt. In diesem Fall wird der Webvorgang gestoppt und die Leuchtdioden 39a werden derart angesteuert, dass der Bereich, in dem es zu dem Fehler gekommen ist, beleuchtet wird. Auf diese Weise ist für den Maschinenbediener sofort intuitiv erkennbar, wo es zu einem Fehler gekommen ist und wo dieser insbesondere fehlerbeseitigende Massnahmen ergreifen muss. Aus diesem Grund ist auch eine bidirektionale (drahtlöse) Datenübertragung 38 zwischen der Datenerfassungs- und Auswerteeinheit 36 und dem Steuergerät 37 sinhvoll.

Wie insbesondere aus Fig. 3 ersichtlich, ist die Kameraanordnung 6 derart angeordnet, dass sich alle Kameraeinrichtungen 20 der Kameraanordnung 6, alle Beleuchtungsvorrichtungen 39 aller Module M0 und ME und alle Datenerfassungs- und Auswerteeinheiten 36 immer ausserhalb der Fachöffnungszone der Webmaschine 2 zur Bildung eines Webfachs 3 befinden (für alle Positionen der Schussfadenanschlagvorrichtung 1 zwischen der ersten Position 15 und der zweiten Position 16). In diesem Fall sind alle Kameraeinrichtungen 20 der Kameraanordnung 6 und alle Beleuchtungsvorrichtungen 39 derart am ersten Bund 24a des Webblatts 17 angeordnet, dass die Kameraeinrichtungen 20 keinen der Durchgänge 18a ganz oder teilweise versperren oder einschränken (im Hinblick auf ein Durchführen von Kettfäden durch die Durchgänge 18a). Für denselben Zweck könnte die Kameraanordnung 6 entsprechend am zweiten Bund 24b angeordnet sein, sodass die Kameraanordnung 6 stets ausserhalb der Fachöffnungszone der Webmaschine 2 zur Bildung eines Webfachs 3 für alle Positionen der Schussfadenanschlagvorrichtung 1 bleibt.

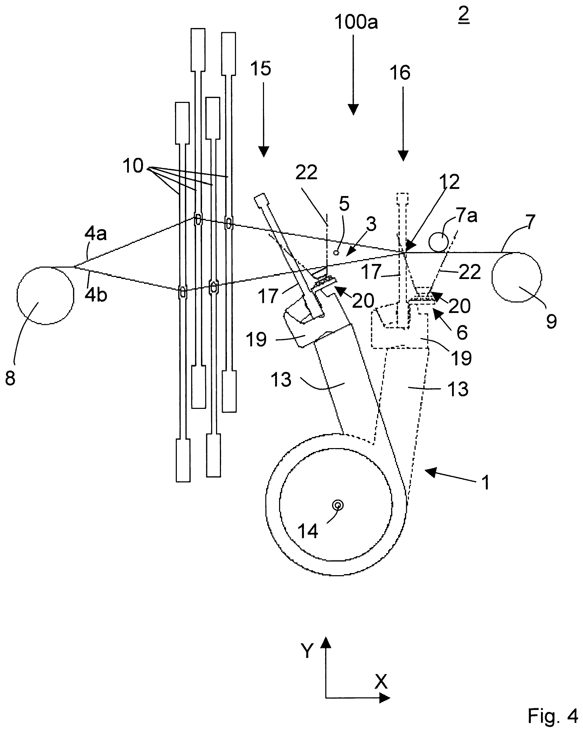

In Fig. 4 ist eine Überwachungsvorrichtung 100a dargestellt, welche eine Variation der in Fig. 1 gezeigten Überwachungsvorrichtung 100 ist. Die Überwachungsvorrichtung 100a ist weitgehend identisch mit der in Fig. 1 dargestellten Überwachungsvorrichtung 100 ausgebildet. Der wesentliche Unterschied zwischen den beiden Überwachungsvorrichtungen 100a und 100 besteht darin, dass bei dem in Fig. 4 dargestellten Ausführungsbeispiel die jeweiligen Kameraeinrichtungen 20 "unten" den Kettfäden 4 gegenüber, also benachbart zur Weblade 13, angeordnet sind. Im Falle der Überwachungsvorrichtung 100a ist die aus den Kameraeinrichtungen 20 gebildete Kameraanordnung 6 an der profilartigen Halterung 19 der Weblade 13, die (ebenfalls) der Befestigung des Webblatts 17 dient, festgelegt.

Ansonsten entsprechen Aufbau und Funktionsweise der Überwachungsvorrichtungen 100 und 100a gemäss Fig. 1 und Fig. 4 weitgehend einander, weshalb auf die vorherigen Ausführungen Bezug genommen wird. Insbesondere dürfte es für einen Fachmann offensichtlich sein, dass die im Zusammenhang mit der Überwachungsvorrichtung 100 offenbarte Erschütterungsdämpfungseinrichtung 28 gemäss Fig. 2 und die JustierEinrichtung 29 zur Justierung der Position der Kameraeinrichtung 20 relativ zur Schussfadenanschlagvorrichtung 1 auf analoge Weise auch in der Überwachungsvorrichtung 100a installiert werden können.

Der Vollständigkeit halber sollte erwähnt werden, dass es selbstverständlich auch möglich ist, sowohl "oben" als auch "unten" den Kettfäden gegenüber Kameraanordnungen 6 vorzusehen. Hierdurch können beide Seiten des Gewebes 7 überprüft werden, sodass die Güte der optischen Überprüfung des Gewebes 7 nochmals steigen kann.

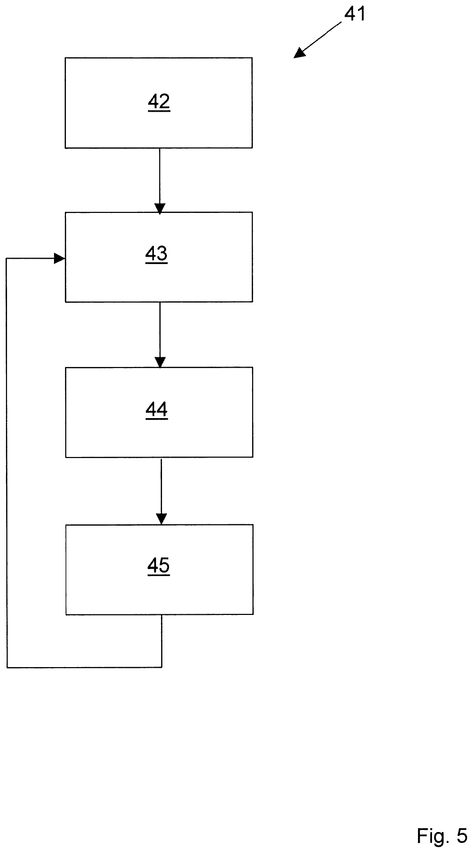

In Fig. 5 ist schliesslich noch in Form eines schematischen Flussdiagramms 41 ein Verfahren zur Überwachung von zumindest Kettfäden 4 in einer Webmaschine 2 mit einer Kameraeinrichtung 20 für einen Webvorgang beschrieben, welche Webmaschine 2 eine bewegbare Schussfadenanschlagvorrichtung 1 umfasst. Dabei wird die Kameraeinrichtung bei einer Bewegung der Schussfadenanschlagvorrichtung 1 mi der Schussfadenanschlagvorrichtung 1 mitbewegt, wobei die Kameraeinrichtung 20 an zumindest zwei unterschiedlichen Bewegungspositionen der Schussfadenanschlagvorrichtung 1 während eines Webvorgangs jeweils ein Bild aufnimmt.

In einem ersten Schritt 42 wird (beispielsweise zu Beginn des Webvorgangs, beispielsweise vor einem ersten Schusseintragszyklus des Webvorgangs) eine Zuordnung der Kettfäden durchgeführt, bei welcher jedem zu überwachenden Kettfaden 4 mindestens einer der Bildpunkte einer der Kameraeinrichtungen 20 zugeordnet. Zur Durchführung dieser Zuordnung braucht die Bildverarbeitungseinrichtung BV die Informationen des Einzugsrapports und Informationen über die Bildpunkte, die jeweils einem der Durchgänge 18a für die Kettfäden 4 im Webblatt 17 entsprechen. Diese Informationen über die (den jeweiligen Durchgängen 18a entsprechenden) Bildpunkte können mit der erwähnten Kalibrierung erhaltet werden oder mit einer Analyse von Bildern ermittelt werden, in denen die Rietzähne 18 abgebildet sind.

In einem zweiten Schritt 43 werden während des Webvorgangs zumindest ein Bild mittels einer der Kameraeinrichtungen 20 bzw. Bilder mittels einer oder mehrerer der Kameraeinrichtungen 20 aufgenommen. Der Zeitpunkt der Aufnahme eines Bildes wird für jede Kameraeinrichtung 20 entsprechend einer bestimmten Position der Schussfadenanschlagvorrichtung 1 mit Hilfe der Synchronisierungseinheit SE gesteuert, entsprechend wird die Beleuchtungsvorrichtung 39 zur Beleuchtung der zu überwachenden Kettfäden 4 bzw. Schussfäden bzw. des zu überwachenden Gewebes 7 - synchron zur Aufnahme der Bilder - ebenfalls mithilfe der Synchronisierungseinheit SE gesteuert. Zumindest je ein Bild wird aufgenommen, wenn sich die Schussfadenanschlagvorrichtung 1 in einer bestimmten Position befindet, z.B. wenn sich die Schussfadenanschlagvorrichtung 1 in der Nähe der Anschlagposition befindet (zur Überwachung eines Abschnitts des Gewebes in der Nähe der Schussfadenanschlaglinie) und wenn sich die Schussfadenanschlagvorrichtung 1 in der Rückposition befindet.

In dem Schritt 43 werden Bilddaten, die von den Kameraeinrichtungen 20 geliefert werden, in eine Datenverarbeitungseinrichtung eingelesen. Zusätzlich werden noch weitere Sensordaten eingelesen (wie beispielsweise Daten eines Sensors, welcher die momentane Position der Schussfadenanschlagvorrichtung 1 ermittelt).

Die derart gewonnenen Daten werden in einem Schritt 44 analysiert und aufgearbeitet. Hierzu dient beispielsweise die Datenerfassungs- und Auswerteeinheit 36. Die Aufarbeitung der Daten erfolgt dabei positionsabhängig (wobei sich die Position sowohl auf eine Position in Richtung der Kettfäden 4 als auch auf eine Richtung quer zum Gewebe 7 bzw. parallel zu den Schussfäden 5 beziehen kann). Die Aufarbeitung der Daten hängt von der Position der Schussfadenanschlagvorrichtung 1 ab, in welcher das diesen Daten entsprechendes Bild aufgenommen wird, weil nicht alle Webfehler in einer einzigen Position der Schussfadenanschlagvorrichtung 1 berücksichtigt werden. Die Aufarbeitung der Daten hängt weiterhin von der jeweiligen Schussnummer ab, weil Webfehler wie eine fehlerhaft Kettfadenfarbe oder Flug-Flecken auf der Gewebe 7 nicht für alle Schusseintragszyklen berücksichtigt werden. Kettfadenbrüche werden bei jedem Schusseintragszyklus mithilfe eines Bildes, welches aufgenommen wird, wenn sich die Schussfadenanschlagvorrichtung 1 in Rückposition befindet, und mithilfe eines oder mehrerer weiterer Bilder, welche aufgenommen werden, wenn sich die Schussfadenanschlagvorrichtung 1 in einer Zwischenposition zwischen der Anschlagposition und der Rückposition befindet, überwacht.

Die vorstehend genannte Analyse und Aufarbeitung der Daten kann auf einem Vergleich der während einer Überwachung mittels der Kameraeinrichtungen aufgenommenen Bilder mit bereits vorhandenen (gespeicherten) Bilddaten gewonnen werden, insbesondere Bilddaten, welche während einer Phase des Anwebens vor dem Webvorgang gewonnen wurden, oder Bilddaten, welche in einer Datenbank abgespeichert sind. Bei dieser Analyse und Aufarbeitung werden Eingabedaten benötigt, welche den zu überwachenden Webvorgang charakterisieren, z.B. Schussfadendichte, Position der Schussfadenanschlagvorrichtung, Nummer des gerade eingewebten Schussfadens, Bindungsrapport, Einzugsrapport, Grenzwerte für jeden Webfehler vor einen Webmaschinenstopp. Derartige Eingabedaten können beispielsweise in einem Speicher des Moduls ME gespeichert werden.

Die derart aufbereiteten Daten werden in einem Bewertungsschritt 45 dahingehend bewertet, ob ein Webfehler vorliegt oder nicht. Besonders um die Lokalisierung eines Webfehlers mit Bezug auf eine sich in der Längsrichtung LA1 des Webblatts 17 erstreckende Koordinaten Achse zu ermöglichen, wird die in Schritt 42 durchgeführte Zuordnung benutzt. Die schritte 43, 44 und 45 werden innerhalb des Schusseintragszyklus geführt, in dem die Bilder aufgenommen werden, damit korrigierende Massnahmen (als Reaktion auf einen Webfehler) am schnellsten getroffen werden können. Webfehler werden also in Echtzeit detektiert, die Fehlerart bestimmt und das fehlerhafte Webelement (Kettfaden Nr k, Schussfaden Nr s, Ort eines Fehler in der Gewebezone, u.ä.) werden gemeldet. In Abhängigkeit von der "Schwere" des Fehlers kann ein Ausgabesignal derart erfolgen (beispielsweise an ein bzw. von einem Steuergerät 37), dass der Webvorgang geeignet modifiziert wird, sodass der entstandene Fehler verringert bzw. im Wesentlichen beseitigt wird. Möglich ist es aber auch, dass der Webvorgang der Webmaschine 2 gestoppt wird, damit ein Maschinenbediener einen Fehler beseitigen kann (insbesondere einen Fehler, der nicht oder nur problematisch automatisiert beseitigt werden kann, wie z.B. einen Kettfadenbruch).

Anschliessend beginnt der Zyklus mit einem erneuten Aufnahme von Bildern (Schritt 43).

Das Verfahren kann selbstverständlich im Zusammenhang mit beliebigen Vorrichtungen verwendet werden. Die Verwendung der Bezugsziffern der in den Figuren 1 bis 4 dargestellten Ausführungsbeispiele erfolgte lediglich aus Gründen der Verständlichkeit.

Mit Bezug auf Fig. 6 wird im Folgenden schematisch ein Beispiel für eine Steuerung der Überwachungsvorrichtung 100 gemäss Fig. 1-3 in Kombination mit einer Steuerung der Webmaschine 2 für den Fall beschrieben, dass die Fäden 4, 5 und das Gewebe 7 einer Webmaschine 2 mittels der Überwachungsvorrichtung 100 überwacht wird. Fig. 6 stellt schematisch relevante funktionelle Elemente der Webmaschine 2 und relevante funktionelle Elemente der Überwachungsvorrichtung 100 dar. In Fig. 6 dargestellte Pfeile oder Doppelpfeile symbolisieren entweder eine Kommunikation von Daten oder Signalen (z.B. zur Steuerung und/oder zur Übermittlung von Informationen) oder eine Bereitstellung von Energie (Stromversorgung bzw. Spannungsversorgung, um elektrische Einrichtungen zu betreiben).

Wie Fig. 6 andeutet, umfasst die Webmaschine 2 beispielsweise die folgenden funktionellen Elemente:
- eine Einrichtung P0 zur Energieversorgung, welche dazu bestimmt ist, zumindest die Webmaschine 2 mit Energie zu versorgen, und an welche die Überwachungsvorrichtung 100 angeschlossen werden kann, um die Webmaschine 2 in Kombination mit der Überwachungsvorrichtung 100 zu betreiben;
- eine Steuereinrichtung KW zur Steuerung des Betriebs der Webmaschine 2;
- eine Steuereinrichtung K1 zur Steuerung einer Kommunikation zwischen der Webmaschine 2 und der Überwachungsvorrichtung 100 und eventuell zur Verarbeitung von Daten, welche von der Überwachungsvorrichtung 100 erzeugt werden können;
- einen Speicher S1 für Eingabedaten De, welche für die Steuereinrichtung K1 bereitgestellt werden und gegebenenfalls von der Überwachungsvorrichtung 100 benötigt werden; und
- die Fachbildungsvorrichtung 11, welche bereits im Zusammenhang mit Fig. 1 beschrieben wurde.

Wie ersichtlich, steht die Steuereinrichtung KW mit der Steuereinrichtung K1 in Verbindung zum Austausch von Daten (z.B. bidirektional).

Die Steuereinrichtung K1 steht mit der Fachbildungsvorrichtung 11 und dem Speicher S1 für Eingabedaten De in Verbindung zum Austausch bzw. zur Übermittlung bzw. zum Empfangen von Daten. Auf diese Weise erhält die Steuereinrichtung K1 Informationen von der Fachbildungsvorrichtung 11 (z.B. über Kettfadenpositionen bzw. Informationen bzgl. des Bindungsrapports eines herzustellenden Gewebes 7) oder im Speicher S1 abgelegte Eingabedaten De. Die Eingabedaten De können z.B. umfassen: Betriebsdaten der Webmaschine 2 (z.B. Schussfadensequenz, Schussdichte, Position der Schussfadenanschlagvorrichtung 1), Daten einer Einziehmaschine zum Einziehen einer Webkette in das Webblatt 17 (Einzugsrapport), Vorgaben eines Bedieners der Webmaschine 2 (z.B. Soll-Werte für bestimmte Webfehler; Grenzwerte für Betriebsparameter, welche Kriterien für einen Webmaschinenstopp definieren).

Wie weiterhin aus Fig. 6 ersichtlich, hat die Steuereinrichtung K1 die Aufgabe, Ausgabedaten Da zu erzeugen. Diese Ausgabedaten Da betreffen insbesondere eine Kommunikation von Webfehlern (als Ergebnis einer Überwachung der Webmaschine 2 mittels der Überwachungsvorrichtung 100).

Wie Fig. 6 weiterhin andeutet, umfasst die Überwachungsvorrichtung 100 als relevante funktionelle Elemente mehrere Module M0 ("Grundmodul") und ein Modul ME (End-Modul), welche bereits im Zusammenhang mit Fig. 2 und 3 erwähnt wurden. Wie bereits im Zusammenhang mit Fig. 2 und 3 erwähnt wurde, umfasst jedes der Module MO und das Modul ME insbesondere die folgenden Komponenten: mehrere Kameraeinrichtungen 20 zum Aufnehmen von Bildern, mindestens eine Beleuchtungsvorrichtung 39 zur Beleuchtung der Bildbereiche 22 der jeweiligen Kameraeinrichtungen 20 und - als Komponenten der Datenerfassungs- und Auswerteeinheit 36 - jeweils eine Kontroll- und Recheneinheit KM, einen schnellen lokalen Speicher SM und eine Synchronisierungseinheit SE. Alle diese Komponenten sind auf dem Webblatt angeordnet.

Zur Verdeutlichung dieses Sachverhalts ist in Fig. 6 dargestellt, dass der Betrieb jedes Moduls MO bzw. ME von der entsprechenden Kontroll- und Recheneinheit KM gesteuert wird. Zu diesem Zweck steht gemäss Fig. 6 - sowohl im Falle jedes Moduls M0 und des Moduls ME - die Kontroll- und Recheneinheit KM des jeweiligen Moduls M0 bzw. ME mit mehreren Bildsensoren 31 mehrerer Kameraeinrichtungen 20, einem Speicher SM und einer Synchronisierungseinheit SE in Verbindung.

Zusätzlich steht gemäss Fig. 6 - sowohl im Falle jedes Moduls M0 und des Moduls ME - die jeweilige Kontroll- und Recheneinheit KM mit einem Treiber TB für die Beleuchtungsvorrichtung 39 (bzw. die Leuchtdiode 39a der Beleuchtungsvorrichtung) des jeweiligen Moduls M0 bzw. ME in Verbindung. Auf diese Weise ist gewährleistet, dass die Kontroll- und Recheneinheit KM des jeweiligen Moduls M0 bzw. ME die Beleuchtungsvorrichtung 39 des jeweiligen Moduls M0 bzw. ME ansteuern kann, um insbesondere die jeweilige Leuchtdiode 39a je nach Bedarf an- oder auszuschalten.

Die Kontroll- und Recheneinheit KM des jeweiligen Moduls M0 bzw. ME kann insbesondere einen Zeitpunkt, an dem die jeweilige Leuchtdiode 39a angeschaltet wird, um Licht zu erzeugen, und weiterhin eine Zeitdauer, während der die jeweilige Leuchtdiode 39a Licht erzeugen soll, kontrollieren. Die Kontroll- und Recheneinheit KM des jeweiligen Moduls M0 bzw. ME kann auf diese Weise gewährleisten, dass die Beleuchtungsvorrichtung 39 des jeweiligen Moduls M0 bzw. ME insbesondere dann Licht erzeugt, wenn eine Kameraeinrichtung 20 des jeweiligen Moduls M0 bzw. ME ein Bild aufnehmen soll, sodass für eine rechtzeitige Beleuchtung des Bildbereichs 22 der Kameraeinrichtung 20 gesorgt ist.

Wie Fig. 6 weiterhin andeutet, umfasst die Kontroll- und Recheneinheit KM des jeweiligen Moduls M0 bzw. ME eine Bildverarbeitungseinrichtung BV, welche dazu ausgebildet ist, die Bilder, welche mittels der Bildsensoren 31 der Kameraeichrichtungen 20 des jeweiligen Moduls M0 bzw. ME aufgenommen werden, bzw. die von den Bildsensoren 31 bereitgestellten, den jeweils aufgenommenen Bildern entsprechenden Bilddaten zu verarbeiten und zu analysieren.

Wie bereits erwähnt, hat die Kontroll- und Recheneinheit KM des Moduls ME die Funktion einer "Haupt-Recheneinheit" (Master-Recheneinheit), welche Daten oder Steuersignale an die Kontroll- und Recheneinheiten KM der Module M0 senden kann und Daten von den Kontroll- und Recheneinheiten KM der Module M0 empfangen kann. Zur Übermittlung der Daten oder Steuersignale sind die Kontroll- und Recheneinheiten KM der Module M0 mittels der Verbindungen 38a seriell miteinander verbunden, wobei die Kontroll- und Recheneinheiten KM eines der Module M0 über eine Verbindung 38a mit der Kontroll- und Recheneinheit KM des Moduls ME verbunden ist (Fig. 6).

Wie weiterhin aus Fig. 6 ersichtlich, können Daten bzw. Signale zwischen der Kontroll- und Recheneinheit KM des Moduls ME und der Steuereinrichtung K1 mittels einer drahtlosen Datenübertragung 38 übermittelt werden. Das Modul ME umfasst weiterhin einen Speicher S2, auf welchen die Kontroll- und Recheneinheit KM des Moduls ME Zugriff hat. Der Speicher S2 ist dazu bestimmt, verschiedene Eingabedaten zu speichern, welche die Überwachungsvorrichtung 100 verwendet, um die Kettfäden, Schussfäden, und Gewebe auf der Webmaschine 2 überwachen zu können. Diese Eingabedaten können beispielsweise Informationen über den Einzug von Kettfäden (Einzugsrapport), die Art und Anordnung Bindungen zwischen Kett- und Schussfaden eines von der Webmaschine 2 herzustellendes Gewebe, die Eigenschaften und den Zustand des Webblatts 17 und dergleichen umfassen.

Das Modul ME umfasst weiterhin eine Sensoreinrichtung BS zur Bestimmung der momentanen Position der Schussfadenanschlagvorrichtung 1 der Webmaschine 2. Die Sensoreinrichtung BS ist mit der Kontroll- und Recheneinheit KM des Moduls ME verbunden, sodass die Kontroll- und Recheneinheit KM des Moduls ME Daten oder Signale der Sensoreinrichtung BS gegebenenfalls verwerten kann und auf diese Weise über eine Information darüber verfügt, an welcher Position sich die Schussfadenanschlagvorrichtung 1 während eines Webvorgangs an einem bestimmten Zeitpunkt befindet. Dementsprechend kann die Kontroll- und Recheneinheit KM des Moduls ME die Komponenten der Überwachungsvorrichtung 100 und insbesondere die Module M0 in Abhängigkeit von der Bewegungsposition der Schussfadenanschlagvorrichtung 1 steuern. Die Sensoreinrichtung BS kann beispielsweise als Beschleunigsensor, welcher geeignet ist, eine Beschleunigung der Schussfadenanschlagvorrichtung 1 zu bestimmen, ausgebildet sein oder zumindest einen derartigen Beschleunigsensor umfassen.

Die Kontroll- und Recheneinheit KM jedes der Module ME bzw. M0 kann insbesondere dazu ausgebildet sein, das Aufnehmen von Bildern mittels der Kameraeinrichtungen 20 der Überwachungsvorrichtung 100 zu steuern, gegebenenfalls auch in Abhängigkeit von Daten oder Signalen der Sensoreinrichtung BS. Zu diesem Zweck umfasst die Kontroll- und Recheneinheit KM jedes der Module ME bzw. M0 eine Bild-Steuerungseinrichtung BSE, die in Datenverbindung mit der Synchronisierungseinheit SE des Moduls ME bzw. M0 ist, um den Zeitpunkt zu steuern, an welchem eine bestimmte Kameraeinrichtung 20 des Moduls ME bzw. M0 ein Bild aufnehmen soll (Fig. 6).

Alternativ wäre es denkbar, dass die Bild-Steuerungseinrichtung BSE des Moduls ME beispielsweise dazu ausgebildet sein kann, die Kameraeinrichtungen 20 der Module MO direkt anzusteuern (in Fig. 6 nicht dargestellt). Um die Kameraeinrichtungen 20 der Module M0 zum Aufnehmen von Bildern zu veranlassen, kann die Bild-Steuerungseinrichtung BSE des Moduls ME beispielsweise entsprechende Steuerdaten an die Kontroll- und Recheneinheiten KM der Module M0 senden. In Abhängigkeit von diesen Steuersignalen kann die Kontroll- und Recheneinheiten KM eines bestimmten Moduls MO schliesslich die Kameraeinrichtungen 20 und die Beleuchtungsvorrichtung 39a ansteuern, um diese Kameraeinrichtungen 20 zum Aufnehmen eines oder mehrerer Bilder zu veranlassen.

Die jeweilige Bildverarbeitungseinrichtung BV eines der Module M0 oder des Moduls ME kann beispielsweise dazu ausgebildet sein, mit Informationen von der Synchronisierungseinheit SE über den Aufnahmezeitpunkt jedes Bildes, für jedes Bild, welches von einer der Kameraeinrichtungen 20 des jeweiligen Moduls M0 oder des Moduls ME aufgenommen wird, die entsprechenden vom Bildsensor 31 der jeweiligen Kameraeinrichtung 20 bereitgestellten Rohdaten in Abhängigkeit von der Position der Schussfadenanschlagvorrichtung 1, bei welcher das jeweilige Bild aufgenommen wurde, zu analysieren (beispielsweise gemäss einem Verfahren wie oben beschrieben), um einen Webfehler zu detektieren. Auf diese Weise könnte die Bildverarbeitungseinrichtung BV eines der Module M0 oder des Moduls ME beispielsweise ermitteln, ob ein Kettfaden 4 in einem bestimmten Durchgang 18a des Webblatts 17 vorhanden ist oder nicht und ob das jeweils ermittelte Ergebnis mit den Eingabedaten, welche im Speicher S2 des Moduls ME bereitgestellt sind, konsistent ist. Sollte letzteres nicht der Fall sein, wäre dies eventuell ein Hinweis dafür, dass ein Kettfadenbruch im Bereich des Durchganges 18a vorliegt. Die jeweils von der Bildverarbeitungseinrichtung BV berechneten Daten können beispielsweise im Speicher SM des jeweiligen Moduls M0 bzw. ME gespeichert werden.

Sollte eine aufwändige (gegebenenfalls eine grosse Rechenzeit erfordernde) Analyse eines Bildes erforderlich sein (dies könnte beispielsweise der Fall sein, wenn eine Analyse der in einem Bild enthaltenen Farbinformationen berücksichtigt werden muss), so wäre es möglich, die vom Bildsensor 31 der jeweiligen Kameraeinrichtung 20 bereitgestellten Rohdaten und/oder die (auf der Grundlage dieser Rohdaten) jeweils von der Bildverarbeitungseinrichtung BV berechneten Daten mittels der drahtlosen Datenübertragung 38 an die Steuereinrichtung K1 der Webmaschine 2 weiterzuleiten. Aufwändige Analysen von Bildern könnten demnach auch von einer anderen Bildverarbeitungsvorrichtung durchgeführt werden, welche nicht notwendigerweise an der Schussfadenanschlagvorrichtung 1 angeordnet sein muss, sondern beispielsweise in die Steuereinrichtung K1 integriert sein könnte oder anderweitig in der Webmaschine 2 untergebracht oder gegebenenfalls auch entfernt von Webmaschine 2 angeordnet sein könnte (sofern zwischen dieser anderen Bildverarbeitungseinrichtung und der Steuereinrichtung K1 eine geeignete Datenübertragung zur Übertragung der zu verarbeitenden Bilddaten implementiert ist).

Es sei darauf hingewiesen, dass die Überwachungsvorrichtung 100 nicht so eingerichtet sein muss, dass alle Kameraeinrichtungen 20 der Überwachungsvorrichtung 100 jeweils gleichzeitig ein Bild aufnehmen. Da jeder Webfehler nicht auf allen Bildern eines Schussfadeneintragszyklus detektieren werden kann und da jeder Webfehler nicht mit derselben Frequenz detektiert werden soll (eine Bildanalyse für Kettfadenbruch soll mindestens einmal pro Schussfadeneintragszyklus geführt werden, während eine Bildanalyse für Flug und Flecken nur jeden zwanzigsten Schussfadeneintragszyklus geführt wird), kann es auch zweckmässig sein, dass zu einem bestimmten Zeitpunkt bzw. an einer bestimmten Position der Schussfadenanschlagvorrichtung 1 lediglich eine Kameraeinrichtung 20 oder nur ein Teil der Gesamtheit aller Kameraeinrichtungen 20 der Kameraanordnung 6 dazu veranlasst wird, ein Bild aufzunehmen. Beispielsweise kann es ausreichend sein, dass während eines Webprozesses an einem Zeitpunkt nur ein Teil der Gesamtheit aller Kameraeinrichtungen 20 der Kameraanordnung 6 dazu veranlasst wird, jeweils ein Bild aufzunehmen, während an einem anderen Zeitpunkt ein anderer Teil der Gesamtheit aller Kameraeinrichtungen 20 der Kameraanordnung 6 dazu veranlasst wird, jeweils ein Bild aufzunehmen. Auf diese Weise wird es möglich, mit der Überwachungsvorrichtung 100 an verschiedenen Zeitpunkten jeweils verschiedene Teilbereiche der Webmaschine zu überwachen. Auf diese Weise ist es möglich, die Anzahl der aufzunehmenden (und zu analysierenden) Bilder zu minimieren. Da die Überwachungsvorrichtung 100 die aufgenommenen Bilder jeweils in Echtzeit analysiert, kann auf diese Weise der Rechenaufwand der Kontroll- und Recheneinheiten KM der Module M0 und des Moduls ME reduziert werden.

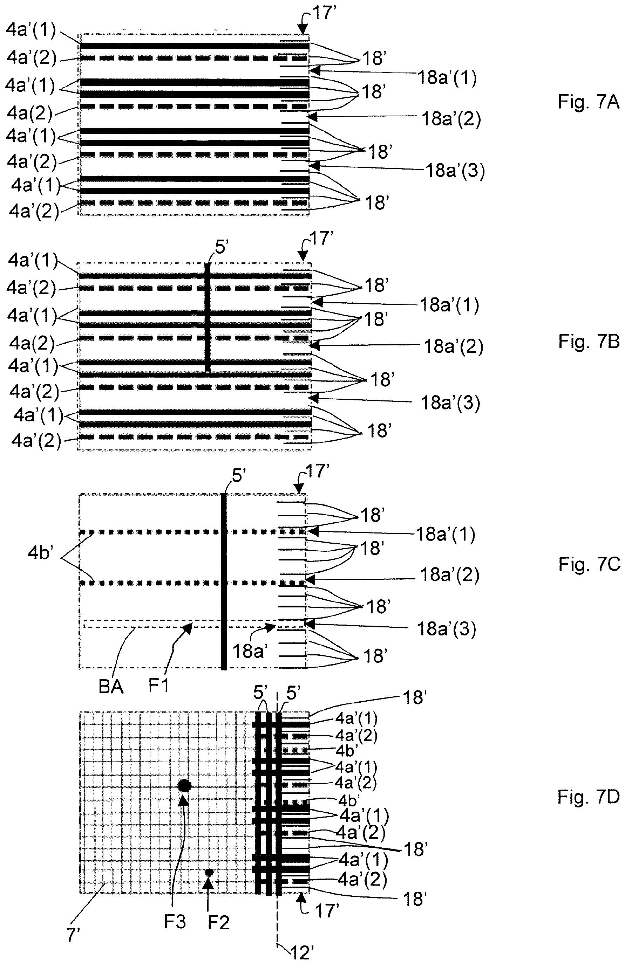

Fig. 7A-7D zeigen (gezeichnete) Darstellungen von verschiedenen Bildern, welche mit einer (jeweils derselben) Kameraeinrichtung 20 der Überwachungsvorrichtung 100 gemäss Fig. 1-3 für verschiedene Bewegungspositionen der Schussanschlagvorrichtung 1 aufgenommen werden können.

Fig. 7A-7D zeigen Bildern des ganzen Bildbereichs der Kameraeinrichtung 20.

Im Falle der Fig. 7A ist angenommen, dass sich die Schussfadenanschlagvorrichtung 1 in der ersten Position 15 (Rückposition) befindet. Im Falle der Fig. 7B ist angenommen, dass sich die Schussfadenanschlagvorrichtung 1 in einer Zwischenposition zwischen der ersten Position 15 und der zweiten Position 16 (Anschlagposition) befindet. Im Falle der Fig. 7B ist angenommen, dass sich die Schussfadenanschlagvorrichtung 1 in einer Zwischenposition zwischen der Position gemäss Fig. 7B und der zweiten Position 16 (Anschlagposition) befindet. Hingegen ist im Falle der Fig. 7D angenommen, dass sich die Schussfadenanschlagvorrichtung 1 in der Nähe der zweiten Position 16 (Anschlagposition) befindet. Dabei beziehen sich die Fig. 7A-7D auf jeweils aufeinander folgende Zeitpunkte während desselben Schussfadeneintragszyklus.

Wie aus Fig. 7A-7D ersichtlich, sind auf den verschiedenen Bildern der Kameraeinrichtung 20 abgebildet:
- Ein Abschnitt des Webblatts 17 mit mehreren, nebeneinander angeordneten Rietzähnen (in Fig. 7A-7D ist der abgebildete Abschnitt des Webblatts 17 mit dem Bezugszeichen 17' und jeder abgebildete Rietzahn 18 mit dem Bezugszeichen 18' gekennzeichnet);
- jeweils ein Abschnitt von mehreren nebeneinander angeordneten Kettfäden 4;
- ein Abschnitt von einem oder mehreren Schussfäden 5, mit Ausnahme von Fig. 7A, welche keinen Schussfaden zeigt (in Fig. 7B-7D ist der abgebildete Abschnitt des jeweiligen Schussfadens 5 mit dem Bezugszeichen 5' gekennzeichnet);
- ein Abschnitt des bereits hergestellten Gewebes 7, mit Ausnahme von Fig. 7A-7C, welche keinen Abschnitt des Gewebes 7 zeigen (in Fig. 7D ist der abgebildete Abschnitt des Gewebes 7 mit dem Bezugszeichen 7' gekennzeichnet).

Die in Fig. 7A-7D dargestellten Bilder entsprechen der in Fig. 1 dargestellten Situation, in welcher nicht alle Kettfäden 4 in einer einzigen Ebene aufgespannt sind: In der Situation gemäss Fig. 1 ist ein geöffnetes Webbfach 3 ausgebildet, sodass eine erste Gruppe 4a von Kettfäden von einer zweiten Gruppe 4b von Kettfäden im Bereich des Webfachs 3 in der Längsrichtung der in Fig. 1 dargestellten Koordinatenachse Y voneinander separiert sind und deshalb auch unterschiedliche Abstände relativ zur Kämeraeinrichtung 20 haben. Im Folgenden wird auch berücksichtigt, dass nicht alle Kettfäden 4 identisch ausgebildet sind, sondern derart (visuell erkennbar) unterschiedlich sind, dass Unterschiede auf den Bildern erkennbar sind und durch eine Bildverarbeitung der Bilder von der Überwachungsvorrichtung 100 wahrgenommen werden können (z.B. wenn verschiedene Fäden unterschiedliche Farben, unterschiedliche Durchmesser oder unterschiedlich beschaffene Oberflächen aufweisen).

In Fig. 7A-7D bezeichnet: das Bezugszeichen 4a'(1) einen abgebildeten Abschnitt eines zur ersten Gruppe 4a gehörenden Kettfadens gemäss einer ersten Ausführungsform; das Bezugszeichen 4a'(2) einen abgebildeten Abschnitt eines zur ersten Gruppe 4a gehörenden Kettfadens gemäss einer zweiten Ausführungsform, welche sich von der ersten Ausführungsform (visuell erkennbar) unterscheidet; das Bezugszeichen 4b' einen abgebildeten Abschnitt eines zur zweiten Gruppe 4b gehörenden Kettfadens.

Die in Fig. 7A-7D dargestellten Bilder weisen die Gemeinsamkeit auf, das auf allen Bildern - jeweils am rechten Rand und jeweils in derselben Position relativ zum rechten Bildrand - der abgebildete Abschnitt 17' des Webblatts 17 erscheint und mehrere abgebildete Rietzähne 18' (nebeneinander angeordnet) sichtbar sind. Sichtbar sind insbesondere die zwischen den abgebildeten Rietzähnen 18' ausgebildeten Durchgänge (für Kettfäden). Wie Fig. 7A-7D andeuten, ist die Kameraeinrichtung 20 derart am Webblatt 17 angeordnet, dass der erste (obere) Bund 24a des Webblatts 17 auf keinem der Bilder abgebildet ist, so dass alle _Bilder eine freie Sicht auf die abgebildeten Rietzähne 18' und insbesondere die (zwischen jeweils zwei der abgebildeten Rietzähne 18' ausgebildeten) Durchgänge für die Kettfäden ermöglichen. Demnach ermöglichen die Bilder gemäss Fig. 7A-7C eine visuelle Kontrolle, ob die abgebildeten Rietzähne 18' sich in einem ordnungsgemässen Zustand befinden oder gegebenenfalls einen Defekt aufweisen. Weiterhin ist visuell erkennbar, durch welchen der Durchgänge zwischen jeweils zwei der abgebildeten Rietzähne 18' einer der abgebildeten Abschnitte 4a'(1), 4a'(2) oder 4b' durchgeführt ist.

Wie aus Fig. 7A ersichtlich, ist die Kameraeinrichtung 20 relativ zum ersten (oberen) Bund 24a des Webblatts 17 derart platziert, dass auf dem Bild gemäss Fig. 7A mehrere (nebeneinander angeordnete und sich parallel zueinander erstreckende) abgebildete Abschnitte 4a'(1) (in Fig. 7A und Fig. 7B als durchgezogene, gerade Linie dargestellt) und mehrere (nebeneinander angeordnete und sich parallel zueinander erstreckende) abgebildeten Abschnitte 4a'(2) (in Fig. 7A und Fig. 7B als mehrfach unterbrochene, gerade Linie dargestellt) erkennbar sind. In Fig. 7A ist insbesondere kein abgebildeter Abschnitt 4b' erkennbar. Gemäss Fig. 7A scheint sich durch jeden der abgebildeten Durchgänge, welche zwischen jeweils zwei der abgebildeten Rietzähne 18' ausgebildet sind, höchstens ein abgebildeter Abschnitt 4a'(1) oder ein abgebildeter Abschnitt 4a'(2) zu erstrecken. Durch drei der abgebildeten Durchgänge erstreckt sich keiner der abgebildeten Abschnitte 4a'(1) bzw. 4a'(2) (diese drei der abgebildeten Durchgänge sind in Fig. 7A, 7B und 7C mit den Bezugszeichen 18a'(1), 18a'(2) bzw. 18a'(3) bezeichnet). Auf Fig. 7A ist kein Schussfaden und kein Gewebe erkennbar.

Fig. 7A und Fig. 7B unterscheiden sich dadurch, dass die Schussfadenanschlagvorrichtung 1 von der Rückposition in eine andere Position bewegt wurde (wie erwähnt). Im Falle der Fig. 7B ist die relative Anordnung der ersten Gruppe 4a der Kettfäden 4 relativ zum Webblatt 17 dieselbe wie im Fall der Fig. 7A. Die Lage der abgebildeten Abschnitte 4a'(1) und 4a'(2) ist daher in Fig. 7A und 7B identisch. Gemäss Fig. 7B wurde (im Unterschied zur Situation gemäss Fig. 7A) ein Schussfaden 5 in das Webfach 3 eingetragen und befindet sich gerade in einer Bewegung durch das Webfach 3, sodass sich auf dem Bild gemäss Fig. 7B ein Ende eines abgebildeten Abschnitts 5' eines Schussfadens 5 (in Fig. 7B als durchgezogene, sich von oben nach unten erstreckende Linie dargestellt) unter einem Teil der abgebildeten Abschnitte 4a'(1) und 4a'(2) erstreckt (jeweils senkrecht zu den abgebildeten Abschnitten 4a'(1) und 4a'). Wie ersichtlich erstreckt sich gemäss Fig. 7B der abgebildete Abschnitt 5' in einem Abstand zu den abgebildeten Rietzähnen 18'.

Fig. 7B und Fig. 7C unterscheiden sich dadurch, dass zwischen der Situation gemäss Fig. 7B und der Situation gemäss Fig. 7B die Zeit fortgeschritten ist und die Schussfadenanschlagvorrichtung 1 in eine andere Position weiterbewegt wurde (wie erwähnt). Der abgebildete Abschnitt 5' erstreckt sich nun (von oben nach unten) durch das ganze Webfach und demzufolge durch das ganze in Fig. 7C dargestellte Bild. Auf dem Bild gemäss Fig. 7C ist weiterhin keiner der Abschnitte 4a'(1) und 4a'(2) erkennbar, welche in Fig. 7A und 7B sichtbar sind. Dafür sind auf dem Bild gemäss Fig. 7C zwei abgebildete Abschnitte 4b' von zur zweiten Gruppe 4b gehörenden Kettfäden sichtbar (in Fig. 7C als gestrichelte Linien dargestellt). Wie ersichtlich, erstrecken sich diese zwei Abschnitte 4b' durch die abgebildeten Durchgänge 18a'(1) bzw. 18a'(2).

In Fig. 7C ist ein rechteckiger Abschnitt BA des dargestellten Bildes angegeben (ein äusserer Rand dieses Abschnitts BA ist in Fig. 7C als gestrichelte Linie dargestellt), welcher sich auf dem dargestellten Bild horizontal bis an den rechten Rand des Bildes und insbesondere in den abgebildeten Durchgang 18a'(3) erstreckt. Wie aus Fig. 7C entnehmbar, ist im Abschnitt BA des dargestellten Bildes kein Kettfaden erkennbar.

Da die im Einzugsrapport enthaltenen Informationen und die im Bindungsrapport enthaltenen Informationen der Bildverarbeitungseinrichtung BV zu Verfügung stehen, weiss die Bildverarbeitungseinrichtung BV, dass für diesen Schussfadeneintragszyklus ein zur zweiten Gruppe 4b gehörender Kettfaden in Durchgang 18a'(3) zu erwarten ist.

Unter diesen Umständen würde ein "Fehler" vorliegen, welcher durch eine Bildverarbeitung der in den Fig. 7C dargestellten Bilder erkennbar ist und ausserdem mit grosser Genauigkeit lokalisierbar ist: Zur Veranschaulichung wird in Fig. 7C mit einem Pfeil F1 auf den Abschnitt BA des dargestellten Bildes verwiesen, welcher auf einen fehlerhaften Kettfaden hinweist und die Position dieses Fehlers markiert. Dieser Fehler kann insbesondere einem einzigen Durchgang 18a im Webblatt 17 zugeordnet werden.

In der in Fig. 7D dargestellten Situation befindet sich die Schussfadenanschlagvorrichtung 1 inzwischen in der Nähe der zweiten Position 16 (Anschlagposition). Dementsprechend ist auf dem in Fig. 7D dargestellten Bild ein Abschnitt 7' des Gewebes 7 abgebildet, welcher auf der rechten Seite des Bildes durch die Schussfadenanschlaglinie begrenzt ist (in Fig. 7D ist der Verlauf der Schussfadenanschlaglinie durch eine gestrichelte Linie mit dem Bezugszeichen 12' dargestellt). Dementsprechend erstreckt sich der abgebildete Abschnitt 17' des Webblatts 17, dicht an die Linie 12' angrenzend, im Wesentlichen parallel zur Linie 12'. Am rechten Rand des abgebildeten Abschnitts 7' des Gewebes 7 ist ein (dicht an die Linie 12' angrenzender, sich im Wesentlichen parallel zur Linie 12' erstreckender) Abschnitt 5' des Schussfadens dargestellt, welcher auf den in Fig. 7B und 7C dargestellten Bildern jeweils einen Abstand zum abgebildeten Abschnitt 17' des Webblatts 17 aufweist, auf dem Bild gemäss Fig. 7D allerdings unmittelbar an den abgebildeten Abschnitt 17' des Webblatts 17 grenzt und mit dem Webblatt 17 in eine sich entlang der Linie 12' erstreckende Lage befördert wird. Auf dem abgebildeten Abschnitt 7' des Gewebes 7 sind zwei Stellen mit lokal begrenzten Webfehlern (z.B. Flug oder Flecken auf dem Gewebe) erkennbar, welche durch Pfeile F2 und F3 markiert sind.

Wie ersichtlich, ermöglichen die in Fig. 7A-7D dargestellten Bilder jeweils eine Bildanalyse entlang einer (zumindest) im Wesentlichen parallel zur Schussfadenanschlaglinie 12 verlaufenden Richtung. Eine derartige Bildanalyse kann mittels der beschriebenen Bildverarbeitung, insbesondere mithilfe der beschriebenen Bildverarbeitungseinrichtungen BV, durchgeführt werden.

## Patentansprüche

1. Überwachungsvorrichtung (100, 100a) für eine Webmaschine (2),
welche Überwachungsvorrichtung mindestens eine Kameraeinrichtung (20) und
eine Schussfadenanschlagvorrichtung (1) umfasst,
wobei die Schussfadenanschlagvorrichtung (1) ein Webblatt (17) und/oder eine Weblade (13) umfasst und sich das Webblatt (17) und/oder die Weblade (13) in einer Längsrichtung (LA1, LA2) der Schussfadenanschlagsvorrichtung (1) erstreckt
**dadurch gekennzeichnet, dass**
die mindestens eine Kameraeinrichtung (20) an der Schussfadenanschlagvorrichtung (1) befestigt ist, sodass die mindestens eine Kameraeinrichtung (20) während eines Webvorgangs bei einer Bewegung der Schussfadenanschlagvorrichtung keine andere Bewegung als eine Mitbewegung mit der Schussfadenanschlagvorrichtung (1) hat,
wobei die mindestens eine Kameraeinrichtung (20) mit mindestens einem Bildsensor ausgestattet ist, welcher mehrere lichtempfindliche, jeweils nebeneinander angeordnete Sensorelemente umfasst, um ein Bild von Kettfäden (4, 4a, 4b) in Form einer Mehrzahl nebeneinander angeordneter Bildpunkte aufzunehmen, wobei die Bildpunkte mindestens in einer sich im Wesentlichen parallel zur Längsrichtung (LA1, LA2) der Schussfadenanschlagvorrichtung (1) erstreckenden Reihe angeordnet sind.

2. Überwachungsvorrichtung (100, 100a) nach Anspruch 1, wobei
die Schussfadenanschlagvorrichtung (1) mindestens das Webblatt (17) aufweist und
die Kameraeinrichtung (20) an einem ersten Bund (24a) oder an einem zweiten Bund (24b) des Webblatts (17) angeordnet ist.

3. Überwachungsvorrichtung (100, 100a) nach Anspruch 1 oder 2, wobei
das Webblatt (17) mehrere nebeneinander angeordnete Rietzähne (18) umfasst und die Kameraeinrichtung (20) ausgebildet ist, mittels der Sensorelemente ein Bild von zumindest einem Teil der Rietzähne (18) aufzunehmen.

4. Überwachungsvorrichtung (100, 100a) nach einem der Ansprüche 1-3, wobei zumindest eine Erschütterungsdämpfungseinrichtung (28) zwischen der Schussfadenanschlagvorrichtung (1) und der Kameraeinrichtung (20) angeordnet ist.

5. Überwachungsvorrichtung (100, 100a) nach einem der Ansprüche 1-4, mit einer Einrichtung (29) zur Justierung der Position der mindestens einen Kameraeinrichtung (20) relativ zur Schussfadenanschlagvorrichtung (1).

6. Überwachungsvorrichtung (100, 100a) nach einem der Ansprüche 1-5, mit mindestens einer Bildverarbeitungseinrichtung (BV) zur Analyse eines von der Kameraeinrichtung (20) aufgenommenen Bildes, um einen Fehler zu detektieren, und mit einem Datenspeicher (SM), welcher mit der Bildverarbeitungseinrichtung (BV) in Datenverbindung steht, wobei die Bildverarbeitungseinrichtung (BV) und der Datenspeicher (SM) mit der Schussfadenanschlagvorrichtung (1) mechanisch verbunden sind.

7. Überwachungsvorrichtung (100, 100a) nach einem der Ansprüche 1 - 5,
wobei die Kameraeinrichtung (20) ausgebildet ist, Bilddaten zur Darstellung eines aufgenommenen Bildes bereitzustellen,
mit einer Bildverarbeitungseinrichtung (BV), welche dazu ausgelegt ist, von der Kameraeinrichtung (20) bereitgestellte Bilddaten zu analysieren und Daten als Ergebnis einer Analyse der Bilddaten zu generieren,
mit einer Datenübertragungseinrichtung, welche mit der Schussfadenanschlagvorrichtung (1) mechanisch verbunden ist und dazu ausgebildet ist, von der Kameraeinrichtung (20) bereitgestellte Bilddaten und/oder von der Bildverarbeitungseinrichtung (BV) generierte Daten drahtlos zu übertragen.

8. Überwachungsvorrichtung (100, 100a) nach einem der Ansprüche 1 - 7,
mit einer Mehrzahl der Kameraeinrichtung(20),
wobei mehrere der Kameraeinrichtungen (20) in einer Reihe hintereinander entlang der Längsrichtung (LA1, LA2) der Schussfadenanschlagvorrichtung (1) angeordnet sind, und
wobei jede Kameraeinrichtung zumindest einen Bildbereich (22) aufweist und zwei der Kameraeinrichtungen (20) derart nebeneinander angeordnet sind, dass sich die Bildbereiche (22) der zwei der Kameraeinrichtungen (20) überlappen.

9. Überwachungsvorrichtung (100, 100a) nach Anspruch 8, wobei zumindest zwei der Kameraeinrichtungen (20) mit mindestens einer Beleuchtungseinrichtung (39) in einem Modul (M0, ME) angeordnet sind und das Modul ausserdem zumindest umfasst:
eine gemeinsame Bild-Steuerungseinrichtung (BSE) zum Ansteuern der zumindest zwei der Kameraeinrichtungen (20), um die zumindest zwei der Kameraeinrichtungen (20) zumindest dazu zu veranlassen, Bilder aufzunehmen, und/oder
eine gemeinsame Bildverarbeitungseinrichtung (BV) zur Verarbeitung der von den zumindest zwei der Kameraeinrichtungen (20) aufgenommenen Bilder.

10. Überwachungsvorrichtung nach einem der Ansprüche 8 oder 9, wobei die Schussfadenanschlagvorrichtung (1) einen Längsabschnitt aufweist, welcher in dem Webblatt (17) ausgebildete Durchgänge (18a) für die Kettfäden (4) umfasst,
und wobei sich die Gesamtheit aller Bildbereiche (22) der Kameraeinrichtungen (20) in einer Richtung parallel zur Längsrichtung (LA1, LA2) der Schussfadenanschlagvorrichtung (1) über eine Distanz (Ref) erstrecken, welche grösser oder gleich der Länge (B) des Längsabschnitts der Schussfadenanschlagvorrichtung (1) ist.

11. Überwachungsvorrichtung (100, 100a) nach einem der Ansprüche 1 - 10, wobei an der Schussfadenanschlagvorrichtung (1) zusätzlich eine Sensoreinrichtung (BS) zur Bestimmung einer momentanen Position der Schussfadenanschlagvorrichtung (1) befestigt ist und die Sensoreinrichtung (BS) in Datenverbindung ist:
mit einer Bild-Steuerungseinrichtung (BSE) zum Ansteuern der mindestens einen Kameraeinrichtung (20), um die Kameraeinrichtung (20) zum Aufnehmen eines Bildes zu veranlassen, und/oder
mit einer Bildverarbeitungseinrichtung (BV) zur Verarbeitung eines von der Kameraeinrichtung (20) aufgenommenen Bildes.

12. Überwachungsvorrichtung (100, 100a) nach einem der Ansprüche 1 - 11, mit einer Synchronisierungseinheit (SE), welche dazu ausgebildet ist, die Kameraeinrichtung (20) mit einer Position (15, 16) der Schussfadenanschlagvorrichtung (1) zu synchronisieren, um die Kameraeinrichtung (20) in Abhängigkeit von einer Position der Schussfadenanschlagvorrichtung (1) zu steuern.

13. Webmaschine (2), mit
einer Überwachungsvorrichtung (100, 100a) nach einem der vorangehenden Ansprüche und
zumindest einer Steuereinrichtung (KW) zur Ansteuerung von zumindest einer Komponente der Webmaschine (2), wobei die Steuereinrichtung (KW) dazu ausgebildet ist, von der Kameraeinrichtung (20) direkt oder indirekt Daten zu empfangen.

14. Verfahren zur Überwachung von zumindest Kettfäden (4) in einer Webmaschine (2) mit mindestens einer Kameraeinrichtung (20), welche Webmaschine (2) eine Schussfadenanschlagvorrichtung (1) umfasst, die während eines Webvorgangs zwischen einer Rückposition und einer Anschlagposition bewegt wird,
**dadurch gekennzeichnet, dass**, während des Webvorgangs, die Kameraeinrichtung (20) bei einer Bewegung der Schussfadenanschlagvorrichtung (1) an der Schussfadenanschlagvorrichtung (1) befestigt ist und mit der Schussfadenanschlagvorrichtung (1) mitbewegt wird und
die Kameraeinrichtung (20) an zumindest einer Position (15, 16) der Schussfadenanschlagvorrichtung (1) ein Bild von Kettfäden in einer digitalen Darstellung aufnimmt, welche mehrere nebeneinander angeordnete Bildpunkte umfasst.

15. Verfahren nach Anspruch 14, wobei
eine Bildverarbeitung (BV) zumindest eines von der Kameraeinrichtung (20) aufgenommenen Bilds durchgeführt wird, um einen Fehler für zumindest einen der Kettfäden (4) zu detektieren und den Fehler längs einer Richtung zu lokalisieren, welche zumindest teilweise parallel zu einer Schussfadenanschlaglinie (12) der Schussfadenanschlagvorrichtung (1) verläuft.

16. Verfahren nach Anspruch 15, wobei
die Kameraeinrichtung (20) jedes Bild in Form einer Mehrzahl nebeneinander angeordneter Bildpunkte aufnimmt, für den Webvorgang eine Zuordnung der Kettfäden (4) durchgeführt wird, bei welcher jedem zu überwachenden Kettfaden (4) mindestens einer der Bildpunkte zugeordnet wird, und
der Fehler mithilfe der Zuordnung lokalisiert wird.

17. Verfahren nach einem der Ansprüche 15 - 16, wobei, falls mittels der Bildverarbeitung (BV) ein Fehler detektiert wird, ein an der Schussfadenanschlagvorrichtung (1) angeordnetes Gerät, vorzugsweise eine Beleuchtungsvorrichtung (39), angesteuert wird, sodass das Gerät sichtbar die Position des Fehlers anzeigt.

18. Verfahren nach einem der Ansprüche 14 - 17, wobei Kettfadenfehler und zusätzlich Schussfadenfehler und/oder Gewebefehler überwacht werden.

## Claims

1. A monitoring device (100, 100a) for a weaving machine (2),
which monitoring device comprises at least one camera apparatus (20) and
a weft-thread beat-up device (1), wherein
the weft-thread beat-up device (1) comprises a reed (17) and/or a batten (13), and the reed (17) and/or the batten (13) extend in a longitudinal direction (LA1, LA2) of the weft-thread beat-up device (1)
**characterised in that**,
the at least one camera apparatus (20) is fastened to the weft-thread beat-up device (1) such that in the event of a movement of the weft-thread beat-up device during a weaving process, the at least one camera apparatus (20) has no movement other than a co-movement with the weft-thread beat-up device (1), wherein
the at least one camera apparatus (20) is equipped with at least one image sensor, which comprises a plurality of light-sensitive sensor elements, in each case disposed next to each other, in order to record an image of warp threads (4, 4a, 4b) in the form of a plurality of pixels disposed next to each other, wherein the pixels are disposed at least in a row extending substantially parallel to the longitudinal direction (LA1, LA2) of the weft-thread beat-up device (1).

2. The monitoring device (100, 100a) according to Claim 1, wherein
the weft-thread beat-up device (1) has at least the reed (17), and
the camera apparatus (20) is disposed on a first collar (24a), or on a second collar (24b), of the reed (17).

3. The monitoring device (100, 100a) according to Claim 1 or 2, wherein
the reed (17) comprises a plurality of reed teeth (18) disposed next to each other, and the camera apparatus (20) is configured to record, by means of the sensor elements, an image of at least a part of the reed teeth (18).

4. The monitoring device (100, 100a) according to any one of Claims 1 - 3, wherein
at least one vibration damping device (28) is disposed between the weft-thread beat-up device (1) and the camera apparatus (20).

5. The monitoring device (100, 100a) according to any one of Claims 1 - 4,
with a device (29) for adjusting the position of the at least one camera apparatus (20) relative to the weft-thread beat-up device (1).

6. The monitoring device (100, 100a) according to any one of Claims 1 - 5,
with at least one image processing device (BV) for analysing an image recorded by the camera apparatus (20) in order to detect a fault, and with a data memory (SM), which is in data connection with the image processing device (BV), wherein
the image processing device (BV) and the data memory (SM) are mechanically connected to the weft-thread beat-up device (1).

7. The monitoring device (100, 100a) according to any one of Claims 1 - 5, wherein
the camera apparatus (20) is configured to provide image data for the display of a recorded image,
with an image processing device (BV), which is configured for analysing image data provided by the camera apparatus (20), and for generating data as a result of an analysis of the image data,
with a data transmission device, which is mechanically connected to the weft-thread beat-up device (1), and is configured for wirelessly transmitting image data provided by the camera apparatus (20), and/or data generated by the image processing device (BV).

8. The monitoring device (100, 100a) according to any one of Claims 1 - 7,
with a plurality of the camera apparatuses (20), wherein
the plurality of the camera apparatuses (20) is disposed in a row one behind another along the longitudinal direction (LA1, LA2) of the weft-thread beat-up device (1), and wherein
each camera apparatus has at least one image region (22), and two of the camera apparatuses (20) are disposed next to each other in such a way that the image regions (22) of the two camera apparatuses (20) overlap.

9. The monitoring device (100, 100a) according to Claim 8, wherein
at least two of the camera apparatuses (20) with at least one lighting device (39) are disposed in a module (M0, ME), and the module further comprises at least:
a common image control device (BSE) for triggering the at least two of the camera apparatuses (20), in order to at least cause the at least two of the camera apparatuses (20) to record images,
and/or a common image processing device (BV) for processing the images recorded by the at least two of the camera apparatuses (20).

10. The monitoring device according to any one of Claims 8 or 9, wherein
the weft-thread beat-up device (1) has a longitudinal section, which comprises passages (18a) for the warp threads (4) formed in the reed (17), and wherein
the entirety of all the image regions (22) of the camera apparatuses (20) extend in a direction parallel to the longitudinal direction (LA1, LA2) of the weft-thread beat-up device (1) over a distance (Ref), which is greater than or equal to the length (B) of the longitudinal section of the weft-thread beat-up device (1).

11. The monitoring device (100, 100a) according to any one of Claims 1 - 10, wherein
in addition, one sensor device (BS) for determining an instantaneous position of the weft-thread beat-up device (1) is fastened to the weft-thread beat-up device (1), and the sensor device (BS) is in data communication:
with an image control device (BSE) for triggering the at least one camera apparatus (20) in order to cause the camera apparatus (20) to record an image, and/or
with an image processing device (BV) for processing an image recorded by the camera apparatus (20).

12. The monitoring device (100, 100a) according to any one of Claims 1 - 11,
having a synchronising unit (SE), which is configured to synchronise the camera apparatus (20) with a position (15, 16) of the weft-thread beat-up device (1), in order to control the camera apparatus (20) depending on a position of the weft-thread beat-up device (1).

13. A weaving machine (2), having
a monitoring device (100, 100a) according to any one of the preceding claims and
at least one control device (KW) for triggering at least one component of the weaving machine (2), wherein
the control device (KW) is configured to receive data directly or indirectly from the camera apparatus (20).

14. A method for monitoring at least warp threads (4) in a weaving machine (2) having at least one camera apparatus (20), which weaving machine (2) comprises a weft-thread beat-up device (1), which during a weaving process is moved between a back position and a beat-up position,
**characterised in that**,
during the weaving process, the camera apparatus (20) is fastened to the weft-thread beat-up device (1) during a movement of the weft-thread beat-up device (1), and is co-moved with the weft-thread beat-up device (1), and
the camera apparatus (20) records an image of warp threads at at least one position (15, 16) of the weft-thread beat-up device (1) in a digital representation, which comprises a plurality of pixels disposed next to each other.

15. The method according to Claim 14, wherein
an image processing (BV) of at least one image recorded by the camera apparatus (20) is carried out in order to detect a defect for at least one of the warp threads (4) and localise the defect along a direction, which runs at least partially parallel to a weft beat-up line (12) of the weft-thread beat-up device (1).

16. The method according to Claim 15, wherein
the camera apparatus (20) records each image in the form of a multiplicity of pixels disposed next to each other, an assignment of the warp threads (4) is performed for the weaving process in which assignment, to each warp thread (4) to be monitored, at least one of the pixels is assigned, and
the defect is localised with the aid of the assignment.

17. The method according to any one of Claims 15 - 16, wherein,
if a defect is detected by means of the image processing (BV), a device disposed on the weft-thread beat-up device (1), preferably a lighting device (39) is triggered so that the device visibly displays the position of the defect.

18. The method according to any one of Claims 14 - 17, wherein
warp thread defects, and in addition weft thread defects, and/or weaving defects, are monitored.

## Revendications

1. Dispositif de surveillance (100, 100a) pour un métier à tisser (2) ;
lequel dispositif de surveillance comprend au moins un dispositif de caméra (20) et
un dispositif de butée de fil de trame (1), dans lequel le dispositif de butée de fil de trame (1) comprend un peigne (17) et/ou un battant (13) et le peigne (17) et/ou le battant (13) s'étend(ent) dans une direction longitudinale (LA1, LA2) du dispositif de butée de fil de trame (1),
**caractérisé en ce que**
l'au moins un dispositif de caméra (20) est fixé sur le dispositif de butée de fil de trame (1), de telle sorte que l'au moins un dispositif de caméra (20), n'a pas d'autre mouvement qu'un mouvement d'accompagnement avec le dispositif de butée de fil de trame (1) pendant une opération de tissage lors d'un mouvement du dispositif de butée de fil de trame,
dans lequel l'au moins un dispositif de caméra (20) est doté d'au moins un capteur d'image, lequel présente plusieurs éléments de capteur photosensibles, disposés respectivement les uns à côté des autres, pour prendre une photo de fils de chaîne (4, 4a, 4b) sous forme d'une pluralité de points d'images disposés les uns à côté des autres, dans lequel les points d'image sont disposés au moins dans une rangée s'étendant essentiellement parallèlement au sens longitudinal (LA1, LA2) du dispositif de butée de fil de trame (1).

2. Dispositif de surveillance (100, 100a) selon la revendication 1, dans lequel
le dispositif de butée de fil de trame (1) présente au moins le peigne (17) et
le dispositif de caméra (20) est disposé sur un premier épaulement (24a) ou un deuxième épaulement (24b) du peigne (17).

3. Dispositif de surveillance (100, 100a) selon la revendication 1 ou 2, dans lequel
le peigne (17) comprend plusieurs dents de peigne (18) disposées les unes à côté des autres, et le dispositif de caméra (20) est formé pour recevoir une photo d'au moins une partie des dents de peigne (18) au moyen des éléments de capteurs.

4. Dispositif de surveillance (100, 100a) selon l'une des revendications 1 - 3, dans lequel au moins un premier dispositif d'amortissement d'ébranlement (28) est disposé entre le dispositif de butée de fil de trame (1) et le dispositif de caméra (20).

5. Dispositif de surveillance (100, 100a) selon l'une des revendications 1 - 4, comprenant un dispositif (29) d'ajustage de la position de l'au moins un dispositif de caméra (20) par rapport au dispositif de butée de fil de trame (1).

6. Dispositif de surveillance (100, 100a) selon l'une des revendications 1 - 5, comprenant au moins un dispositif de traitement d'image (BV) pour analyser une image prise par le dispositif de caméra (20), pour détecter une erreur, et comprenant une mémoire de données (SM) qui est en liaison de données avec le dispositif de traitement d'image (BV), dans lequel le dispositif de traitement d'image (BV) et la mémoire de données (SM) sont reliés mécaniquement au dispositif de butée de fil de trame (1) .

7. Dispositif de surveillance (100, 100a) selon l'une des revendications 1 - 5, dans lequel
le dispositif de caméra (20) est formé pour fournir des données d'images pour représenter une image prise,
comprenant un dispositif de traitement d'image (BV) qui est conçu pour analyser des données d'images fournies par le dispositif de caméra (20) et générer des données en tant que résultat d'une analyse des données d'images,
comprenant un dispositif de transmission de données qui relié mécaniquement au dispositif de butée de fil de trame (1) et est formé pour transmettre sans fil des données d'images fournies par le dispositif de caméra (20) et/ou des données générées par le dispositif de traitement d'image (BV).

8. Dispositif de surveillance (100, 100a) selon l'une des revendications 1 - 7, comprenant une pluralité de dispositifs de caméra (20),
dans lequel plusieurs des dispositifs de caméra (20) sont disposés dans une rangée les uns derrière les autres le long du sens longitudinal (LA1, LA2) du dispositif de butée de fil de trame (1), et
dans lequel chaque dispositif de caméra présente au moins une zone d'image (22) et deux des dispositifs de caméra (20) sont disposés l'un à côté de l'autre de façon à ce que les zones d'images (22) des deux des dispositifs de caméra (20) se chevauchent.

9. Dispositif de surveillance (100, 100a) selon la revendication 8, dans lequel deux des dispositifs de caméra (20) sont disposés avec au moins un dispositif d'éclairage (39) dans un module (M0, ME) et le module comprend en outre au moins :
un dispositif de commande d'images commun (BSE) pour commander les au moins deux des dispositifs de caméra (20) et faire au moins que les au moins deux des dispositifs de caméra (20) prennent des images, et/ou
un dispositif de traitement d'images (BV) commun pour traiter les images prises par les au moins deux des dispositifs de caméra (20).

10. Dispositif de surveillance (100, 100a) selon au moins l'une des revendications 8 ou 9, dans lequel le dispositif de butée de fil de trame (1) présente un tronçon longitudinal qui comprend, dans le peigne (17), des passages (18a) formés pour les fils de chaîne (4),
et dans lequel la totalité de toutes les zones d'images (22) des dispositifs de caméra (20) s'étendent dans une direction parallèle au sens longitudinal (LA1, LA2) du dispositif de butée de fil de trame (1) sur une distance (Ref) qui est supérieure ou égale à la longueur (B) du tronçon longitudinal du dispositif de butée de fil de trame (1) .

11. Dispositif de surveillance (100, 100a) selon l'une des revendications 1 - 10, dans lequel un dispositif de capteur (BS) est fixé en plus sur le dispositif de butée de fil de trame (1) pour déterminer une position momentanée du dispositif de butée de fil de trame (1), et le dispositif de capteurs (BS) est en liaison de données :
avec un dispositif de commande d'images (BSE) pour commander l'au moins un dispositif de caméra (20), pour faire que le dispositif de caméra (20) prenne au moins une image, et/ou
avec un dispositif de traitement d'images (BV) pour traiter une image prise par le dispositif de caméra (20) .

12. Dispositif de surveillance (100, 100a) selon l'une des revendications 1 - 11, comprenant une unité de synchronisation (SE) qui est conçue pour synchroniser le dispositif de caméra (20) avec une position (15, 16) du dispositif de butée de fil de trame (1) pour commander le dispositif de caméra (20) en fonction d'une position du dispositif de butée de fil de trame (1).

13. Métier à tisser (2), comprenant
un dispositif de surveillance (100, 100a) selon l'une des revendications précédentes et
au moins un dispositif de commande (KW) pour commander au moins une composante du métier à tisser (2),
dans lequel le dispositif de commande (KW) est conçu pour recevoir des données du dispositif de caméra (20) de manière directe ou indirecte.

14. Procédé de surveillance d'au moins des fils de chaîne (4) dans un métier à tisser (2) comprenant au moins un dispositif de caméra (20), lequel métier à tisser (2) comprend un dispositif de butée de fil de trame (1) qui est déplacé entre une position arrière et une position de butée pendant une opération de tissage,
**caractérisé en ce que** pendant l'opération de tissage,
le dispositif de caméra (20), lors d'un mouvement du dispositif de butée de fil de trame (1), est fixé au dispositif de butée de fil de trame (1) et déplacé conjointement avec le dispositif de butée de fil de trame (1) et
le dispositif de caméra (20), à au moins une position (15, 16) du dispositif de butée de fil de trame (1), prend une photo des fils de chaîne dans une représentation numérique, laquelle comprend plusieurs points d'image disposés les uns à côté des autres.

15. Procédé selon la revendication 14, dans lequel
un traitement d'images (BV) d'au moins une image prise par le dispositif de caméra (20) est effectué pour détecter une erreur pour au moins un des fils de trame (4) et localiser l'erreur le long d'un sens qui est au moins partiellement parallèle à une ligne de butée de fil de trame (12) du dispositif de butée de fil de trame (1).

16. Procédé selon la revendication 15, dans lequel
le dispositif de caméra (20) prend chaque image sous forme d'une pluralité de points d'images disposés les uns à côté des autres,
pour l'opération de tissage, une attribution des fils de chaîne (4) est réalisée, dans laquelle au moins un des points d'image est attribué à chaque fil de chaîne (4) à surveiller, et
l'erreur est localisée à l'aide de l'attribution.

17. Procédé selon l'une des revendications 15 - 16, dans lequel si une erreur est détectée au moyen du traitement d'images (BV), un appareil disposé sur le dispositif de butée de fil de trame (1), de préférence un appareil d'éclairage (39), est commandé, de façon à ce que l'appareil indique visiblement la position de l'erreur.

18. Procédé selon l'une des revendications 14 - 17, dans lequel des erreurs de fils de chaîne et en plus les erreurs de fils de trame et/ou les erreurs de tissage sont surveillées.
